# NEUE EUROPÄISCHE PATENTSCHRIFT

(11) **EP 0 893 372 B2**
(45) Veröffentlichungstag und Bekanntmachung des Hinweises auf die Entscheidung über den Einspruch: **12.11.2003**
(45) Hinweis auf die Patenterteilung: 05.01.2000
(21) Anmeldenummer: 98111838.3
(22) Anmeldetag: 26.06.1998
(51) Int. Cl.: B65G 15/58, B65G 17/32

(54) **Vorrichtung zum Transport von Werkstücken, insbesondere von hängenden, tafelförmigen Werkstücken**
Device for the transport of workpieces, especially of suspended, tabular workpieces
Dispositif pour le transport de pièces d'oeuvre, notamment de pièces suspendues tabulaires

(30) Priorität: 24.07.1997 DE 19731901; 27.01.1998 DE 19802943; 27.05.1998 DE 19823582
(43) Veröffentlichungstag der Anmeldung: 27.01.1999
(73) Patentinhaber: Neuhäuser GMBH + CO., D-44532 Lünen (DE)
(72) Erfinder: Janzen, Klaus, 44534Lünen (DE)
(74) Vertreter: Nunnenkamp, Jörg, Dr.

(56) Entgegenhaltungen:
- DE-A- 3 001 531
- DE-A- 4 342 753
- DE-A- 4 433 912
- DE-C- 3 423 482
- DE-C- 19 614 741
- Peter C. Reimers: Neue Magnetband-Stapelanlage optimiert Platinen-Handling, in BÄNDER BLECHE ROHRE, September 1996

## Beschreibung

Die Erfindung betrifft eine Vorrichtung zum Transport von Werkstücken, insbesondere von hängenden, tafelförmigen Werkstücken wie Blechen oder Platten, mit zumindest einem umlaufend angetriebenen Fördergurt für die hieran anzulegenden Werkstücke, und mit einer Haltevorrichtung, an welcher der Fördergurt vorbeigeführt wird, wobei die Haltevorrichtung die Werkstücke mittels eines den Fördergurt durchdringenden Magnetfeldes und/oder durch Erzeugen von Unterdruck an Ansaugöffnungen des Fördergurtes am Fördergurt festhält.

Bei der Förderung von Werkstücken, insbesondere beim hängenden Transport von Blechen oder Platten wird allgemein so vorgegangen, daß das Blech nach seinem Abwickeln von einem Coil mittels einer Blechschere in weiterzuverarbeitende Tafeln geschnitten wird. Diese Tafeln werden einem Zuführförderer zugeführt, von welchem sie mittels der eingangs beschriebenen Vorrichtung übernommen werden. Nach dem Transport werden die Bleche oder Platten an gewünschten Stellen abgeworfen und bilden Stapel oder Pakete auf Hebetischen. Anschließend erfolgt eine Weiterverarbeitung beispielsweise in Biegevorrichtungen oder Formpressen.

Eine Vorrichtung der eingangs beschriebenen Ausführungsform ist aus der DE-PS 196 14 741 bekannt geworden. Hier hat man sich zum Ziel gesetzt, einen hängenden oder aufliegenden Transport bzw. eine Förderung von magnetischen und nichtmagnetischen Werkstücken mit hohen Geschwindigkeiten zu ermöglichen. Zu diesem Zweck ist bei der bekannten Lehre ein kombiniertes Vakuum-Magnet-System (VMS) vorgesehen, welches wenigstens einen benachbart zum Transportband angeordneten Magneten und einen mit einer Vakuumquelle verbundenen Vakuumkanal aufweist. Dieser Vakuumkanal steht über den Magneten durchdringende Saugleitungen mit den Ansaugöffnungen des Transportbandes bzw. Fördergurtes in Verbindung. Der mit ferromagnetischen Einlagen versehene Fördergurt ist in entsprechend gestalteten Führungsleisten am Magneten geführt. Er ist auf seiner den Werkstücken zugewandten Seite mit einer Mehrzahl von hintereinander angeordneten ringförmigen Erhebungen versehen, an welchen die Werkstücke anliegen. Folglich wird ein und derselbe Fördergurt nach dem Stand der Technik sowohl für den Transport von ferromagnetischen als auch nichtferromagnetischen Werkstücken eingesetzt. Im übrigen sind im allgemeinen sowohl das Vakuumsystem als auch das Magnetsystem in Funktion, um eine besonders gute Andrückung der Werkstücke an die Transportbandoberfläche zu gewährleisten. Folglich wird auch bei der Förderung von ferromagnetischen Werkstücken mit Unterdruck gearbeitet.

Die bekannte Vorgehensweise bzw. die vorveröffentlichte Vorrichtung stellt oft nur einen Kompromiß dar, zum einen was die Fähigkeit angeht, Werkstücke mit Unterdruck anzusaugen, zum anderen im Hinblick auf den konstruktiven Aufwand. - So können sich bei den nach dem Stand der Technik eingesetzten sogenannten Flachdichtungen an dem Fördergurt Probleme hinsichtlich auftretender Leckagen ergeben. Folglich ist dann mit einem erhöhten Energieverbrauch für die gesamte Anlage zu rechnen.

Hinzu kommt, daß an dieser Stelle die ansonsten bekannten Fördergurte mit saugnapfartigen Erhebungen (DE-OS 30 01 531) nicht eingesetzt werden, da derartige Erhebungen bzw. Saugtaschen durch mit dem Fördergurt zu transportierende Stahlplatten zerstört werden können.

Im übrigen entstehen Saugverluste dadurch, daß sich der bekannte Fördergurt mit Flachdichtung nicht ohne weiteres an verbeulte oder sonstwie verzogene Blechplatten anpassen kann. Im Bereich einer derartigen Wölbung oder Beule ist folglich mit weiteren Druckverlusten zu rechnen.

Unabhängig davon ist durch die deutsche Offenlegungsschrift 43 42 753 eine mit Saugluft arbeitende Vorrichtung zum hängenden Transport von Blechen bekannt geworden. Diese Vorrichtung weist die Transportstrecke überspannende Transportbänder endlicher Länge quer zur Transportstrecke nebeneinander und parallel zueinander auf. Die Transportbänder sind über gemeinsame Antriebs- und Bewegungsmittel treibbar, deren Bewegungsantrieb reversibel ist für eine hinund hergehende Bewegung der Transportbänder und die in dem die Bleche erfassenden Bereich jeweils einen Saugermittel aufweisenden, gestellgeführten schlittenartigen starren Teil aufweisen bzw. an einen solchen angeschlossen sind. Hierdurch soll eine Vorrichtung zum hängenden Transport auch von nicht magnetisierbaren Gütern geschaffen werden.

Der Erfindung liegt das technische Problem zugrunde, eine Vorrichtung der eingangs beschriebenen Ausführungsform so weiterzubilden, daß bei verringertem Energieverbrauch eine optimale Anpassung an die zu transportierenden Werkstücke gewährleistet ist.

Zur Lösung dieser Aufgabe schlägt die Erfindung bei einer gattungsgemäßen Vorrichtung zum Transport von Werkstücken vor, dass die Haltevorrichtung zumindest eine Magnetvorrichtung mit Magnetfördergurt und zumindest eine hiervon getrennte Unterdruckvorrichtung mit Unterdruckfördergurt aufweist, wobei die Magnetvorrichtung oder die Unterdruckvorrichtung mit ihrem jeweiligen Fördergurt gegenüber einem gemeinsamen Bezugsglied jeweils verschiebbar und (wechselweise) in Kontakt mit den zu transportierenden Werkstücken bringbar sind, und wobei die Magnetvorrichtung an einen Basisträger und die Unterdruckvorrichtung an einen demgegenüber im Wesentlichen vertikal im Vergleich zu einer Transportrichtung bewegbaren Verschiebeträger angeflanscht ist oder umgekehrt. Der Begriff "wechselweise" schließt im Rahmen der Erfindung selbstverständlich auch die Möglichkeit ein, beide Vorrichtungen, d.h. Magnet- und Unterdruckvorrichtung, gleichzeitig mit in Kontakt mit den Werkstücken zu bringen.

Nach bevorzugter Ausführungsform ist ferner vorgesehen, dass die Magnetvorrichtung und die Unterdruckvorrichtung gemeinsam an eine sich in Transportrichtung erstreckende Halteprofilleiste als Bezugsglied angeschlossen sind, wobei die Halteprofilleiste den Basisträger und den Verschiebeträger aufweist.

Nach einer alternativen Ausführungsform der Erfindung ist vorgesehen, dass die Unterdruckvorrichtung in die als Bezugsglied ausgebildete Magnetvorrichtung integriert und gegenüber der - regelmäßig feststehenden - Magnetvorrichtung in Richtung auf die Werkstücke bewegbar ist. Selbstverständlich lässt sich die üblicherweise feststehende Magnetvorrichtung auch insgesamt in Kontakt mit den Werkstücken bringen, und zwar als gleichsam höhenverstellbare Haltevorrichtung. Auch versteht es sich, dass die in die Magnetvorrichtung integrierte Unterdruckvorrichtung auch mit der zuvor beschriebenen Vorrichtung kombiniert werden kann. Mit anderen Worten ist im Rahmen der Erfindung eine Haltevorrichtung denkbar, die eine an eine Halteprofilleiste angeschlossene Magnetvorrichtung und Unterdruckvorrichtung sowie zusätzlich eine in die Magnetvorrichtung integrierte Unterdruckvorrichtung aufweist. Ferner ist bevorzugt vorgesehen, dass die in die Unterdruckvorrichtung integrierte Magnetvorrichtung im Querschnitt U-förmig mit U-Basis und U-Schenkeln ausgebildet ist, wobei zumindest zwei Magnetfördergurte fußseitig an den beiden jeweiligen U-Schenkeln vorbeigeführt werden, während die Unterdruckvorrichtung mit dem Unterdruckfördergurt in Längserstreckung zwischen den beiden Magnetfördergurten angeordnet ist.

Durch diese Maßnahmen der Erfindung wird nicht nur der Energieverbrauch deutlich reduziert, sondern es findet gleichzeitig auch eine optimale Anpassung an die zu transportierenden Werkstücke statt. In diesem Zusammenhang sollte betont werden, daß sich die beschriebene Vorrichtung sowohl zum hängenden als auch tragenden bzw. aufliegenden Transport eignet Jedenfalls ist immer gewährleistet, daß entweder die Magnetvorrichtung oder die Unterdruckvorrichtung alternativ (oder auch gemeinsam) zum Einsatz kommen.

Hierbei geht die Erfindung von der jetzigen Erkenntnis aus, daß im allgemeinen ca. 90% der transportierten Werkstücke ferromagnetisch sind, folglich die Magnetvorrichtung zum überwiegenden Teil eingesetzt wird. Konsequenterweise ist es nicht erforderlich, zusätzlich für ein Ansaugen der Werkstücke zu sorgen. Dementsprechend kann als Magnetfördergurt ein einfacher, kostengünstiger Zahnriemen zum Einsatz kommen. Besondere Dichtungseigenschaften sind - wegen der getrennten Auslegung von einerseits Magnetvorrichtung mit Magnetfördergurt und andererseits Unterdruckvorrichtung mit Unterdruckfördergurt - nicht erforderlich. Hinzu kommt, daß für diese Betriebsweise ein Unterdruck nicht benötigt wird, folglich die Vakuumerzeugung insgesamt über Ventile abgeschaltet werden kann. Im übrigen kann der Magnetfördergurt besonders robust ausgeführt sein, um den insbesondere reibenden und abrasiven Eigenschaften der transportierten Bleche bzw. Platten zu begegnen.

Sofern nichtferromagnetische Werkstücke, beispielsweise Alubleche, transportiert werden sollen, wird anstelle der Magnetvorrichtung mit Magnetfördergurt die Unterdruckvorrichtung mit Unterdruckfördergurt in Kontakt mit den zu transportierenden Werkstücken gebracht. Diese Unterdruckvorrichtung und insbesondere der Unterdruckfördergurt kann folglich besonders an die im Zuge der Unterdruckansaugung sich ergebenden Probleme und Anforderungen angepaßt werden.

So ist der regelmäßig als Zahnriemen ausgebildete Unterdruckfördergurt im allgemeinen frontseitig mit Saugnäpfen bestückt. Diese bewirken - im Gegensatz zum Stand der Technik nach der DE-PS 196 14 741 - eine dauerhafte und einwandfreie Ansaugung der zu fördernden Werkstücke. Leckagen sind nicht zu befürchten. Denn es werden sogar Verbeulungen oder Verbiegungen der Werkstücke dadurch ausgeglichen, daß sich die Saugnäpfe (in gewissen Grenzen) schrägstellen können, sich folglich der Kontur des angesaugten Werkstückes anpassen. Dies ist mit den beim Stand der Technik vorgesehenen Flachdichtungen nicht möglich. Hinzu kommt, daß bei dem Transport von beispielsweise Aluplatten Beschädigungen, wie sie bei Stahlplatten allgemein zu befürchten sind, nicht auftreten. Dies läßt sich insbesondere darauf zurückführen, daß Aluminium wesentlich weicher als Stahl ist und nicht im entferntesten die gleichen abrasiven Eigenschaften aufweist. Im übrigen erlaubt die Verwendung von Saugnäpfen auch das Ansaugen von Werkstücken mit mehr oder minder verschmutzten Oberflächen. Hierfür sorgen die bei den Saugnäpfen im allgemeinen vorgesehenen innenseitigen Noppen, welche gleichsam den Federweg des Saugnapfes begrenzen und für ein einwandfreies Anliegen des Werkstückes am Saugnapf sorgen.

Im Ergebnis wird durch die Verwendung der frontseitigen Saugnäpfe nicht nur eine Anpassung an beispielsweise verbeulte Werkstückoberflächen erreicht. Sondern es können auch verschmutzte Bleche problemlos angesaugt werden. Hierbei ist zu berücksichtigen, daß die vorgenannten Saugnäpfe beim Anlagen der Werkstücke gleichsam eine Reinigung der Werkstückoberfläche bewirken, so daß die Kontaktwirkung zwischen Saugnapf und Werkstück bzw. Werkstückoberfläche noch verbessert wird.

Jedenfalls wird insgesamt eine optimale Anpassung an die zu transportierenden Werkstücke erreicht. Dies wird zwar mit einem insgesamt größeren konstruktiven Aufwand gegenüber dem Stand der Technik erkauft, allerdings sind die Kosten insgesamt reduziert, weil der Energieverbrauch erheblich gesenkt werden kann. Außerdem können unterschiedliche Baulängen, einerseits für die Magnetvorrichtung andererseits für die Unterdruckvorrichtung gewählt werden. Folglich sind Kosteneinsparungen und ein problemloses Nachrüsten möglich. Im übrigen kann die Antriebswelle der Vakuum- bzw. Unterdruckvorrichtung in gleicher Position bleiben, welches durch eine besondere Ausgleichskupplung im Antriebskopf erreicht wird. Außerdem wird der Reibwert des Unterdruckfördergurtes nicht erhöht, wenn eine Belastung beim Transport von Werkstücken auf den Unterdruckfördergurt ausgeübt wird.

Im Ergebnis arbeitet die bekannte Vorrichtung nach der DE-OS 43 42 753 fast ausschließlich im energetisch ungünstigen Bereich. Sofern die Lehre nach der DE-PS 196 14 741 ins Kalkül gezogen wird, bietet die Erfindung deutliche Vorteile dahingehend, daß sowohl Unterdruckfördergurt als auch Magnetfördergurt an ihren jeweiligen Einsatzzweck optimal angepaßt werden können. Kompromisse brauchen nicht eingegangen zu werden. Üblicherweise wird bei einer Betriebsweise mit dem Magnetfördergurt ein Unterdruck regelmäßig nicht erzeugt, so daß die Vakuumerzeugung insgesamt über Ventile abgeschaltet werden kann. Natürlich läßt sich bei einer Magnetförderung zusätzlich eine Unterdruckbeaufschlagung realisieren, wenn dies das Gewicht oder die besondere Beschaffenheit der Werkstücke erfordern sollte.

Durch die Integrierung der Unterdruckvorrichtung in die (feststehende) Magnetvorrichtung entsprechend den Ausführungen in Patentanspruch 7 wird eine besonders kompakte Ausführungsform zur Verfügung gestellt, die sämtliche vorgenannten Vorteile aufweist. Regelmäßig läßt sich in diesem Fall und auch ansonsten der Unterdruckfördergurt mit der Unterdruckvorrichtung vorzugsweise in eine Unterdruckförderebene bewegen, welche um ein vorgegebenes Maß von einer durch den Magnetfördergurt definierten Magnetförderebene beabstandet ist. Üblicherweise sind Unterdruckfördergurtebene und Magnetförderebene parallel zueinander ausgerichtet.

Jedenfalls wird insgesamt bei geringem Energieverbrauch und kompaktem Aufbau eine optimale Anpassung an die zu transportierenden Werkstücke erreicht. Der insgesamt größere konstruktive Aufwand gegenüber dem Stand der Technik wird im Rahmen einer Gesamtkostenrechnung dadurch überkompensiert, daß erfindungsgemäß der Energieverbrauch erheblich gesenkt werden konnte. Außerdem sind Nachrüstungen problemlos möglich. Hinzu kommt, daß durch die geringe mechanische Belastung der Fördergurte die Wartungsintervalle verlängert sind, so daß mit nochmaligen Kostenvorteilen zu rechnen ist.

Weitere vorteilhafte Ausgestaltungen sind im folgenden aufgeführt. So weist der Verschiebeträger regelmäßig eine am Basisträger entlanggleitende Befestigungsplatte für die Unterdruckvorrichtung und eine in einer Bohrung im Basisträger vertikal geführte Buchse auf. Auf diese Weise ist eine einwandfreie Vertikalführung des Verschiebeträgers am Basisträger gewährleistet. Selbstverständlich kann anstelle der Unterdruckvorrichtung auch die Magnetvorrichtung an die vorgenannte Befestigungsplatte angeschlossen werden. An die Buchse ist im allgemeinen gleichachsig, d.h. mit gleicher Achse, eine Rolle mit U-förmigem Querschnitt zur reitenden Lagerung auf einer zwischen den U-Schenkeln und an der U-Basis anliegenden Zugstange angeschlossen, wobei die Zugstange in Transportrichtung verschiebbar ausgebildet ist und zumindest eine Auflaufschräge zur vertikalen Bewegung der Rolle und damit des Verschiebeträgers im Zuge der Betätigung der Zugstange aufweist. Im allgemeinen sind mehrere in Transportrichtung hintereinander angeordnete Magnetvorrichtungen und Unterdruckvorrichtungen vorgesehen. Diese können in jeweiligen Modulen zusammengefaßt sein, worauf später auch noch eingegangen wird. Die Anzahl der vorgenannten Auflauf-schrägen richtet sich natürlich nach der Anzahl der Verschiebeträger. Jedenfalls läßt sich durch Verschieben der Zugstange bzw. deren Betätigung insgesamt ein schnelles Umschalten von Magnetbetrieb auf Unterdruckbetrieb erreichen. Dies gelingt einfach dadurch, daß der oder die Verschiebeträger einfach oder synchron mit der Zugstange bewegt wird bzw. werden. Dabei erfolgt eine Umschaltung von einer "Magnetförderung" auf eine "Unterdruckförderung" in weniger als einer Sekunde. - Durch die reitende Lagerung der Rolle auf der Zugstange ist insgesamt deren einwandfreie Führung gewährleistet. Außerdem kann die in der Bohrung geführte Buchse exzentrisch gelagert ausgeführt sein, um eine einwandfreie Vertikalausrichtung sämtlicher Befestigungsplatten und damit Unterdruckvorrichtungen zu ermöglichen.

Die Magnetvorrichtung weist hauptsächlich eine Hohlprofilleiste mit Hauptdruckluftkammern und transportseitig angeschlossener Baueinheit mit zumindest einem Permanentmagneten zur Erzeugung eines Permanentmagnetfeldes und zumindest einer elektrischen Magnetspule bzw. Kompensationsspule zur Erzeugung eines Temporärmagnetfeldes und Kompensation des Permanentmagnetfeldes auf. Eine solche Baueinheit ist vom Prinzip her beispielsweise in der DE-PS 34 23 482 beschrieben. Hierauf wird ebenso Bezug genommen wie auf die DE-Patentanmeldung 197 24 634.6-22. Die Auslegung von Permanentmagnet und elektrischer Magnetspule ist so getroffen, daß die zu transportierenden (ferromagnetischen) Werkstücke von dem Permanentmagneten angezogen werden. Zur Kompensation dieser Anziehung dient die elektrische Magnetspule, welche gleichsam das Permanentmagnetfeld neutralisiert und unter Umständen sogar eine Abstoßung des Werkstückes bewirkt.

Die Hohlprofilleiste und die vorgenannte Baueinheit besitzen im allgemeinen Ausnehmungen für Zähne des anliegend umlaufenden Magnetfördergurtes. Dies gilt natürlich nur für den Fall, daß dieser Magnetfördergurt als Zahnriemen ausgeführt ist, was in der Regel der Fall ist. - Die Unterdruckvorrichtung weist eine Druckluftführungsleiste mit Nebendruckluftkammern sowie zumindest eine Unterdruckquelle mit Vakuum-Erzeuger(n) auf, wobei die Unterdruckquelle druckseitig mit der Druckluftführungsleiste und saugseitig mit den Ansaugöffnungen verbunden ist. Die Nebendruckluftkammern stehen mit den Hauptdruckluftkammern der Magnetvorrichtung in Verbindung und werden durch diese mit Druckluft versorgt.

Die Druckluftführungsleiste besitzt vorzugsweise eine oder mehrere, regelmäßig drei Nebendruckluftkammern. Bei dem Vakuum-Erzeuger handelt es sich im allgemeinen um eine Venturi-Düse mit angeschlossener Unterdruckleitung, welche mit den Ansaugöffnungen in Verbindung steht. Selbstverständlich kann auch so vorgegangen werden, daß anstelle einer Venturi-Düse in der Unterdruckvorrichtung insgesamt Vakuum-Pumpen, Gebläsepumpen usw. zur zentralen Unterdruckbeaufschlagung der Ansaugöffnungen vorgesehen sind. Vehturi-Düsen bieten jedoch den Vorteil, daß mit ihnen schnelle Schaltfrequenzen verwirklicht werden können, folglich bei hoher Transportgeschwindigkeit ein punktgenaues Abwerfen und Ansaugen der zu transportierenden Werkstücke erreicht wird. Im übrigen wirken Venturi-Düsen im allgemeinen schalldämpfend, insbesondere was niederfrequenten Schall angeht.

Durch die Verwendung eines zentralen Permanentmagneten und zumindest einer den Permanentmagneten umschließenden Kompensationsspule bei der Magnetvorrichtung läßt sich (mit Hilfe der Kompensationsspule) gleichsam das Permanentmagnetfeld aus einem Arbeitsspalt zwischen Magnetvorrichtung und Werkstücken zurückdrängen. Auf diese Weise können zuvor magnetisch festgehaltene Werkstücke problemlos und zielgenau am gewünschten Ort abgeworfen werden. Bei der Unterdruckvorrichtung erfolgt der zielgenaue Abwurf durch eine entsprechende Druckbeaufschlagung (anstelle des üblichen Ansaugens), wie nachfolgend noch näher erläutert wird.

Sofern die Magnetvorrichtung im Querschnitt doppelt - U-förmig mit äußerem U-Anker und äußerer Ankerbasis und äußeren Ankerschenkeln sowie innerem U-Anker mit innerer Ankerbasis und inneren Ankerschenkeln ausgebildet ist, ist der Permanentmagnet üblicherweise zwischen den beiden Ankerbasen angeordnet, wobei die Kompensationsspule zwischen jeweils inneren und äußeren Ankerschenkeln plaziert ist.

Zur Bewegung des Unterdruckfördergurtes bzw. der Unterdruckvorrichtung in die Unterdruckförderebene weist die Unterdruckvorrichtung regelmäßig eine angeschlossene Verstellvorrichtung zur im wesentlichen vertikalen Bewegung in Richtung auf die Werkstücke und zurück auf. Diese (regelmäßig bei in die Magnetvorrichtung integrierter Unterdruckvorrichtung zum Einsatz kommende) Verstellvorrichtung ist im allgemeinen an einen Führungskörper bzw. die Unterdruckvorrichtung kopfseitig und an die innere Ankerbasis bzw. die Magnetvorrichtung fußseitig angeschlossen.

Zur Beaufschlagung der Ansaugöffnungen des Unterdruckfördergurtes kann die Unterdruckvorrichtung im Querschnitt einen Führungskörper mit Saugbohrungen für die vorgenannten Ansaugöffnungen im Unterdruckfördergurt aufweisen. Dabei sind die Saugbohrungen und die Ansaugöffnungen regelmäßig konzentrisch auf einer Zentralachse der Unterdruckvorrichtung angeordnet Im Zuge des Umlaufens des Unterdruckfördergurtes bewegen sich die Ansaugöffnungen vorzugsweise jeweils auf einer Längserstrekkungsebene eines Unterdruckkanals, welcher transportseitig an die Saugbohrungen zu deren Verbindung untereinander angeschlossen ist. Folglich ist im Rahmen der Erfindung immer gewährleistet, daß zum einen die Ansaugöffnungen durchgängig mit dem Unterdruckkanal fluchten und zum anderen mit den Saugbohrungen im Zuge des Vorbeiführens maximale Überlappung aufweisen. Dementsprechend werden Druckschwankungen vermieden.

Um die Bewegungen der (integrierten) Unterdruckvorrichtung mit Unterdruckfördergurt gegenüber der (feststehenden) Magnetvorrichtung ausgleichen zu können, ist im allgemeinen an die Saugbohrung im Führungskörper eine seitlich an der Magnetvorrichtung vorbeigeführte Saugleitung mit Bewegungsspiel angeschlossen. Im Gegensatz zur Lehre nach der DE-PS 196 14 741 ist - durch die getrennte Auslegung von Magnetvorrichtung und Unterdruckvorrichtung - eine Durchdringung der Magnetvorrichtung nicht erforderlich. Dies sei ausdrücklich betont. Im einfachsten Fall kann es sich bei der Saugleitung um einen flexiblen Schlauch aber auch um teleskopartig ineinandergreifende konzentrische Rohre handeln, die beim Anstellen der Unterdruckvorrichtung gegen die Werkstücke auseinandergefahren und beim Zurückführen ineinandergesteckt werden.

Der Unterdruckfördergurt kann mit rückseitigen Dichtlippen in sich bildende Dichtspalte zwischen beidseitigen Zentrierbacken des zentralen Führungskörpers eingreifen. Zu diesem Zweck ist der Führungskörper üblicherweise in bezug auf die zuvor bereits angesprochene Zentralachse (der Unterdruckvorrichtung) symmetrisch ausgeführt und weist beidseitige Zentrierbacken unter Bildung eines im wesentlichen U-förmigen Querschnittsprofil auf.

Eine besonders kompakte Ausführungsform bei der in die Magnetvorrichtung integrierten Unterdruckvorrichtung ist dadurch gekennzeichnet, daß der Führungskörper mit den Zentrierbacken eine an die Breite des Unterdruckfördergurtes angepaßte Querausdehnung aufweist, wobei der Führungskörper, die Zentrierbacken und der Unterdruckfördergurt mit seitlichem Spiel in den inneren U-Anker eingesetzt sind. - Bei dem Unterdruckfördergurt handelt es sich nach bevorzugter Ausführungsform der Erfindung regelmäßig um einen solchen, wie er in der DE-Patentanmeldung 197 31 902.5-22 beschrieben ist, auf die ausdrücklich Bezug genommen wird.

Darüber hinaus wird im allgemeinen so vorgegangen, daß die Unterdruckvorrichtung zwei Ventile - mit jeweils zwei Stellungen - aufweist, wobei das eine Ventil zur Druckbeaufschlagung der Unterdruckquelle und das andere Ventil unter Umgehung der Unterdruckquelle zur Druckbeaufschlagung der Ansaugöffnungen ausgebildet ist. Hierdurch werden Totzeiten zwischen Ansaugen und Abwerfen des transportierten Werkstükkes erfolgreich vermieden. Denn während das eine Ventil zur Druckbeaufschlagung der Unterdruckquelle noch geöffnet ist, folglich die Unterdruckquelle saugseitig die Ansaugöffnungen mit Unterdruck beaufschlagt, kann schon das die Unterdruckquelle überbrückende andere Ventil geöffnet werden. Dementsprechend läßt sich ein nahtloser Übergang von Saugen zu Abstoßen (mittels des durch das überbrückende Ventil aufgebauten Überdrucks) verwirklichen. Dies ist besonders bei den heute üblichen kurzen Taktzeiten von erheblicher Bedeutung.

Schließlich ist nach einem weiteren Vorschlag der Erfindung vorgesehen, daß der Unterdruckkanal in Längserstreckungsebene bzw. Längsebene in einzelne Sektionen mit jeweils zwei oder mehreren Saugbohrungen mit angeschlossenen Saugleitungen unter Bildung von jeweiligen Saugmodulen mit jeweils einer Unterdruckquelle verbunden ist. Dabei ist regelmäßig zumindest ein unterdruckmäßig parallel zu den Saugbohrungen bzw. Saugleitungen geschaltetes Vakuumbegrenzungsventil (VBV) vorgesehen. Dieses Vakuumbegrenzungsventil öffnet üblicherweise zur Begrenzung des Unterdruckes bei einem vorgegebenen Unterdruckschwellenwert im Unterdruckkanal bzw. den Saugleitungen oder in der Unterdruckleitung. Im einzelnen ist hierzu bevorzugt vorgesehen, daß das Vakuumbegrenzungsventil eine an die Saugleitungen oder die gemeinsame Unterdruckleitung angeschlossene Unterdruckkammer aufweist, die federunterstützt mittels eines an einen Ventilstößel angeschlossenen, eine Zuluftöffnung verschließenden, Ventiltellers gegenüber Atmosphärendruck abgesperrt ist.

Hierdurch trägt die Erfindung dem Umstand Rechnung, daß bei zunehmender Zahl der verschlossenen Ansaugöffnungen bzw. Saugnäpfe des Unterdruckfördergurtes der Unterdruck bzw. das entstehende Vakuum im Unterdruckkanal bzw. dem gesamten Unterdrucksystem auf unvertretbare Werte steigt. Dies führt dazu, daß der Unterdruckfördergurt letztlich an die Unterdruckvorrichtung und hier besonders den Führungskörper angesaugt wird. Hierdurch wird die Reibung zwischen Führungskörper und Unterdruckfördergurt so erhöht, daß Funktionsbeeinträchtigungen - zumindest ein schwergängiger Lauf des Unterdruckfördergurtes - zu befürchten sind. Außerdem steigt hierdurch der Energieverbrauch für den Antrieb des Unterdruckfördergurtes unverhältnismäßig an.

Diesen Problemen wird erfindungsgemäß durch das parallel zu den Saugleitungen bzw. der gemeinsamen Unterdruckleitung und damit der Unterdruckquelle geschaltete Vakuumbegrenzungsventil (VBV) begegnet. Letztlich kommt es nur darauf an, an irgendeiner Stelle des Unterdrucksystems dieses Vakuumbegrenzungsventil vorzusehen. Denn dieses Ventil sorgt im Ergebnis dafür, daß ab einem bestimmten Unterdruckschwellenwert im Unterdruckkanal, den angeschlossenen Saugbohrungen und den Saugleitungen bzw. der gemeinsamen Unterdruckleitung Zuluft in das vorgenannte System eintreten kann. Dies geschieht dergestalt, daß ab einem bestimmten Unterdruck der Ventilteller gegen Federkraft von der Zuluftöffnung abgehoben wird, so daß Außenluft bzw. Zuluft in die Unterdruckkammer eindringen kann. Folglich wird der Unterdruck im Unterdruckkanal, den Saugleitungen, der gemeinsamen Unterdruckleitung und natürlich auch in den zu den Saugnäpfen führenden Saugbohrungen und in den Saugöffnungen im Unterdruckfördergurt verringert mit der Folge, daß der Unterdruckfördergurt weniger stark angesaugt wird. Gleichzeitig verringert sich die Reibung zwischen Unterdruckfördergurt und Führungskörper.

Zusammenfassend läßt sich die Antriebsleistung für den Unterdruckfördergurt erheblich verringern. Außerdem kann mit einer gleichbleibenden und gleichzeitig variabel einstellbaren Ansaugkraft durch entsprechende Einstellung des Vakuumbegrenzungsventils gearbeitet werden. Auf diese Weise verringert sich der Verschleiß zwischen Fördergurt und Führungskörper und der Transport von angesaugten Werkstükken, insbesondere Blechen oder Platten, gestaltet sich insgesamt ruckfrei. Gleichzeitig wird ein ruhiger Lauf aller beweglichen Teile erzielt. Durch das Arbeiten mit vermindertem Ansaugunterdruck wird ein einwandfreies und gleichmäßiges Ablösen der am Unterdruckfördergurt hängend transportierten Werkstücke erreicht. Außerdem gestaltet sich die Zeitkonstante zum Ansaugen und/oder Abwerfen von Blechen oder Platten äußerst kurz. Als Folge hiervon können die Transportgeschwindigkeiten erhöht sowie die Taktzeiten verkürzt werden. Dies erlaubt einen insgesamt größeren Durchsatz an transportierten Werkstücken im Vergleich zu einer Vorrichtung ohne Vakuumbegrenzungsventil. Schließlich geht mit der Verringerung der Antriebsleistung ein geringerer Energieverbrauch einher und wird darüber hinaus der Geräuschpegel deutlich gesenkt. Dies liegt schlicht und einfach daran, daß durch die verringerten Drücke (Ansaug- und Abwerfdruck) auch die damit verbundenen Geräusche vermindert sind. Ein indirekter Effekt ist darüber hinaus dergestalt zu verzeichnen, daß die Reibungskräfte zwischen Unterdruckfördergurt und Führungskörper verringert sind, somit Reib- und eventuell Blockadegeräusche minimiert werden.

Im folgenden wird die Erfindung anhand einer lediglich ein Ausführungsbeispiel darstellenden Zeichnung näher erläutert; es zeigen:
- Fig. 1: eine erfindungsgemäße Vorrichtung mit Halteprofilleiste als Bezugsglied, dargestellt für den Fall, daß (ferromagnetische) Werkstücke W mittels der Magnetvorrichtung mit Magnetfördergurt transportiert werden,
- Fig. 2: die gleiche Vorrichtung im Falle des Transportes mittels der Unterdruckvorrichtung mit Unterdruckfördergurt,
- Fig. 3a, 3b: eine Seitenansicht, teilweise im Schnitt der Vorrichtung nach den Fig. 1 und 2, wobei Fig. 3a eine Ausführungsform ohne Vakuumbegrenzungsventil und Fig. 3b eine solche mit Vakuumbegrenzungsventil zeigt,
- Fig. 4: eine andere Ausfünrungsförm der Erfindung mit in die Magnetvorrichtung integrierter Unterdruckvorrichtung,
- Fig. 5: eine Abwandlung der Ausführungsform nach Fig. 4,
- Fig. 6: einen vergrößerten Ausschnitt aus den Fig. 1 bis 3 sowie 5, welcher insbesondere den Unterdruckfördergurt zeigt,
- Fig. 7: ein Zeitdiagramm, welches den prinzipiellen Druckauf- und abbau an den Ansaugöffnungen des Unterdruckfördergurtes dokumentiert, und
- Fig. 8: eine schematische Darstellung des Vakuumbegrenzungsventils nach den Fig. 3, 4 und 5 in vergrößerter Ansicht.

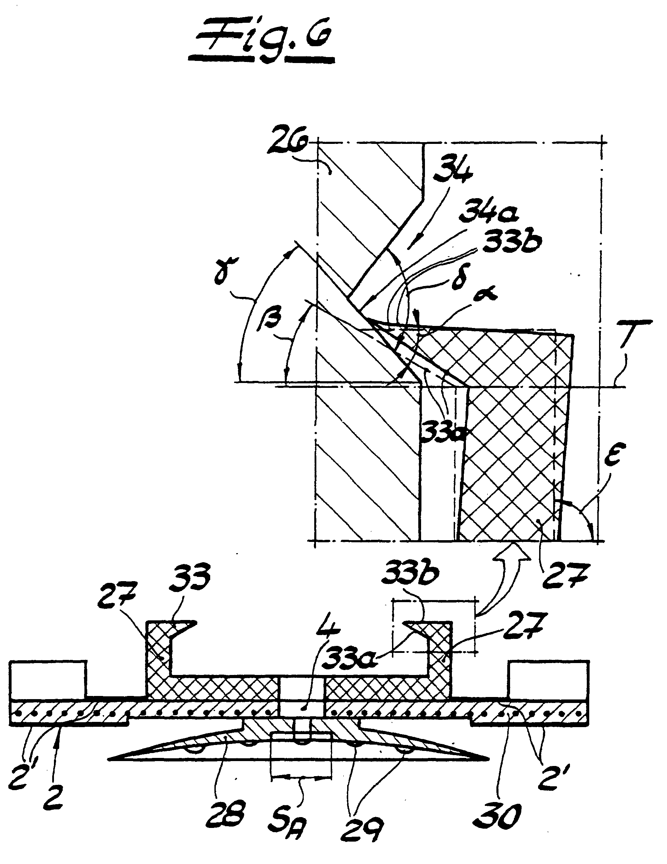

In den Figuren ist eine Vorrichtung zum Transport von Werkstücken W, insbesondere von hängenden, tafelförmigen Werkstücken W wie Blechen oder Platten gezeigt. Diese Vorrichtung weist in ihrem grundsätzlichen Aufbau zumindest einen umlaufend angetriebenen Fördergurt 1, 2 für die hieran anzulegenden Werkstücke W auf. Zusätzlich ist eine Haltevorrichtung 3 verwirklicht, an welcher der Fördergurt 1, 2 vorbeigeführt wird. Die Haltevorrichtung 3 hält die Werkstücke W mittels eines den Fördergurt 1, 2 durchdringenden Magnetfeldes (vgl. die strichpunktierten Magnetfeldlinien in Fig. 4) und /oder durch Erzeugen von Unterdruck an Ansaugöffnungen 4 des Fördergurtes 1, 2 am Fördergurt 1,2 fest.

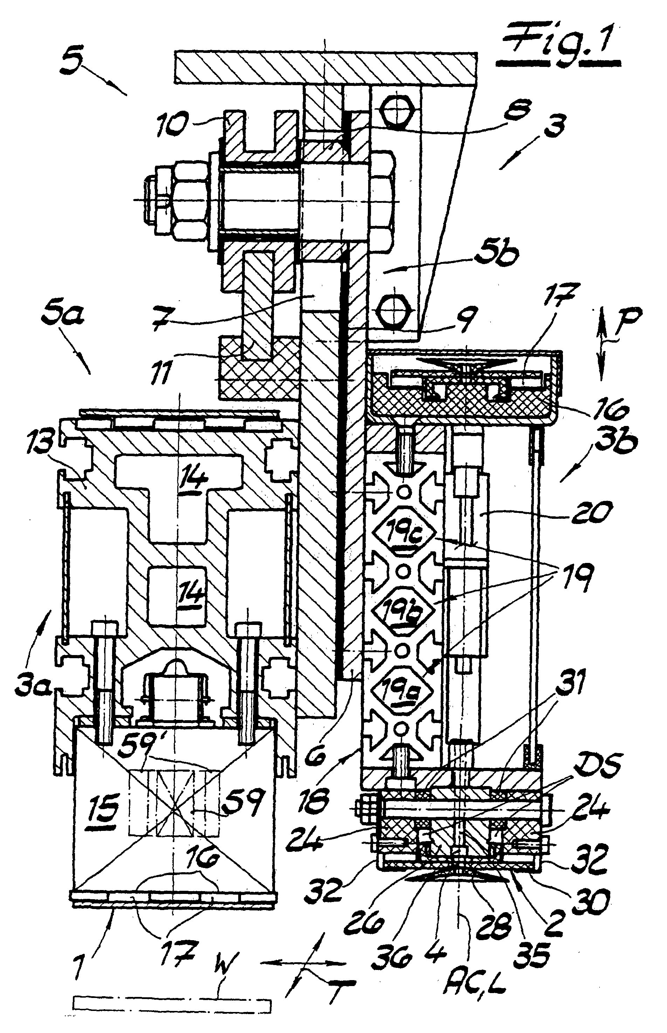

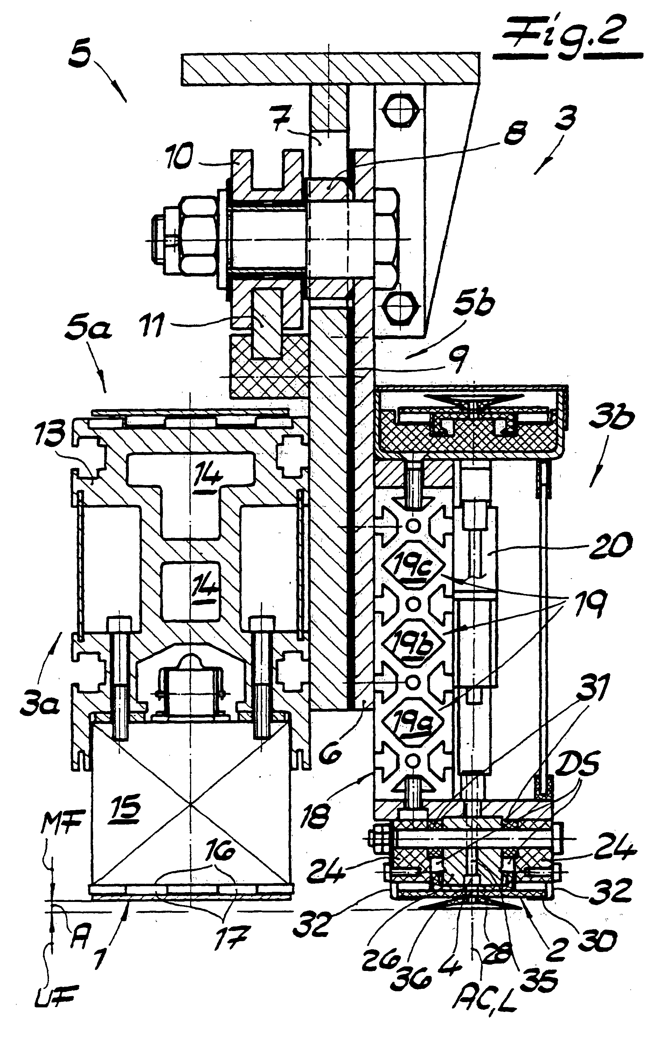

Im Ausführungsbeispiel nach den Fig. 1 bis 3 sind zwei Fördergurte 1, 2 verwirklicht, nämlich ein Magnetfördergurt 1 und ein Unterdruckfördergurt 2. Bei der alternativen Ausführungsform nach den Fig. 4 und 5 sind zwei Magnetfördergurte 1 sowie ein Unterdruckfördergurt 2 dargestellt. Vorliegend gehört der dort gezeigte Unterdruckfördergurt 2 zu einer in die Magnetvorrichtung 3a integrierten Unterdruckvorrichtung 3b. Diese Unterdruckvorrichtung 3b läßt sich zusammen mit dem Unterdruckfördergurt 2 gegenüber der (feststehenden) Magnetvorrichtung 3a in Richtung auf die Werkstücke W bewegen. Zu diesem Zweck ist der Unterdruckfördergurt 2 zusammen mit der Unterdruckvorrichtung 3b in eine Unterdruckförderebene UF gegen die Werkstücke W anstellbar, wobei diese Unterdruckförderebene UF um ein vorgegebenes Maß A von einer durch die Magnetfördergurte 1 definierten Magnetförderebene MF beabstandet ist (vgl. Fig. 4). Dabei richtet sich das vorgenannte Maß A bzw. der Abstand A zwischen Unterdruckförderebene UF und Magnetförderebene MF üblicherweise nach den baulichen Gegebenheiten sowie der Beschaffenheit der Werkstücke W. Ausweislich der Fig. 4 befindet sich die Unterdruckförderebene UF regelmäßig unterhalb der Magnetförderebene MF, wobei die Unterdruckvorrichtung 3b in Ruhestellung innerhalb der Magnetvorrichtung 3a oberhalb der Magnetförderebene MF plaziert ist, und zwar in einem Abstand C von dieser Magnetförderebene MF. Jedenfalls läßt sich der Unterdruckfördergurt 2 und mit ihm die Unterdruckvorrichtung 3b entsprechend gegenüber der Magnetförderebene MF entweder oberhalb und/oder unterhalb hiervon anordnen, wobei die Alternative "und" die Möglichkeit repräsentiert, zwei oder mehr Unterdruckvorrichtungen 3b mit Unterdruckfördergurten 2 vorzusehen. - In den Fig. 1 und 2 sind vergleichbare Verstellmöglichkeiten der Unterdruckvorrichtung 3b dargestellt.

Zur entsprechenden Verstellung dient bei dem Ausführungsbeispiel nach den Fig. 4 und 5 eine an die Unterdruckvorrichtung 3b angeschlossene Verstellvorrichtung 55, welche lediglich angedeutet ist. Bei dieser Verstellvorrichtung 55 kann es sich um eine oder mehrere in Längserstreckung angeordnete Zylinder-/Kolbeneinheiten handeln, die die Unterdruckvorrichtung 3b im wesentlichen vertikal in Richtung auf die Werkstücke W und zurück bewegen und im Querschnitt beidseitig einer Saugleitung 54 angeordnet sind. Die vorgenannte Verstellvorrichtung 55 ist an einen Führungskörper 26 kopfseitig und an die Magnetvorrichtung 3a bzw. eine im folgenden noch näher zu erläuternde innere Ankerbasis 57a fußseitig angeschlossen.

Jedenfalls weist die Haltevorrichtung 3 immer zumindest eine Magnetvorrichtung 3a mit Magnetfördergurt 1 und zumindest eine hiervon getrennte Unter druckvorrichtung 3b mit Unterdruckfördergurt 2 auf. Üblicherweise sind in Längserstreckung der Haltevorrichtung 3, d.h. in Transport(ebenen)richtung T mehrere Magnetvorrichtungen 3a und/oder Unterdruckvorrichtungen 3b hintereinander angeordnet. Die Magnetvorrichtung 3a und/oder die Unterdruckvorrichtung 3b sind - wie beschrieben - mit ihrem jeweiligen Fördergurt 1, 2 gegenüber einem gemeinsamen Bezugsglied 5 jeweils verschiebbar und in Kontakt mit den zu transportierenden Werkstücken W bringbar. Bei dem Bezugsglied 5 handelt es sich nach dem Ausführungsbeispiel in den Fig. 4 und 5 um die Magnetvorrichtung 3a. Die in den Fig. 1 bis 3 dargestellte Vorrichtung weist dagegen als Bezugsglied 5 eine Halteprofilleiste 5 auf. - Immer ist gewährleistet, daß die jeweilige Magnetvorrichtung 3a wie auch die jeweilige Unterdruckvorrichtung 3b mit ihrem jeweiligen Fördergurt 1, 2 wechselweise in Kontakt mit den zu transportierenden Werkstücken bringbar sind. Natürlich ist auch eine gleichzeitige Anlage möglich.

Zu diesem Zweck ist ausweislich der Fig. 1 bis 3 die bereits angesprochene und sich in Transport(ebenen)richtung T erstreckende Halteprofilleiste 5 mit Basisträger 5a und Verschiebeträger 5b vorgesehen. Dabei ist die Magnetvorrichtung 3a an den Basisträger 5a und die Unterdruckvorrichtung 3b an den hierzu im wesentlichen vertikal im Vergleich zur Transport(ebenen)richtung T bewegbaren Verschiebeträger 5b angeflanscht. Selbstverständlich kann auch umgekehrt verfahren werden. Die Bewegungsrichtung des Verschiebeträgers 5b ist in den Fig. 1 und 2 mit einem Pfeil P angedeutet.

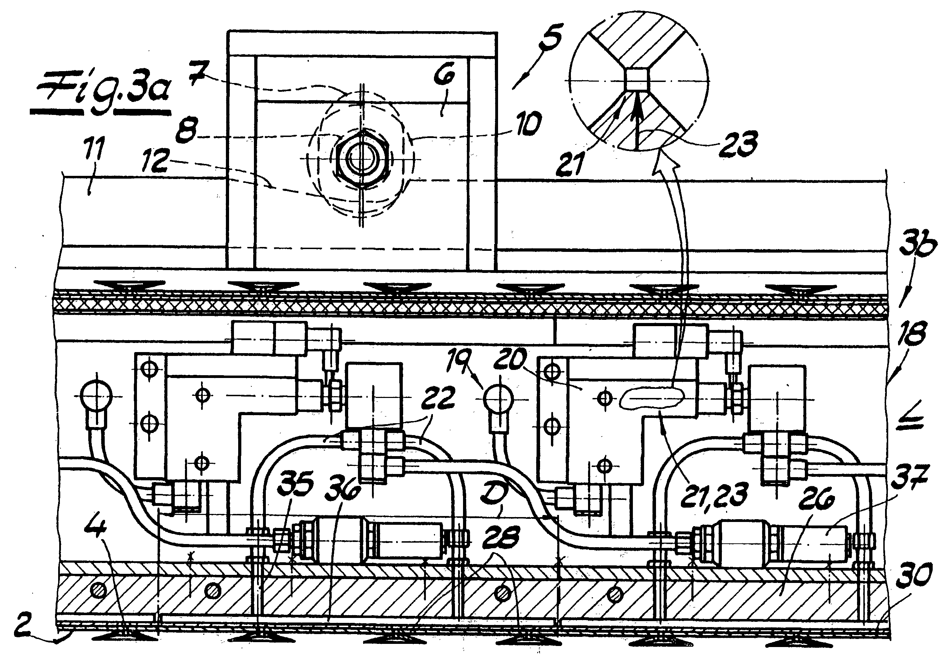

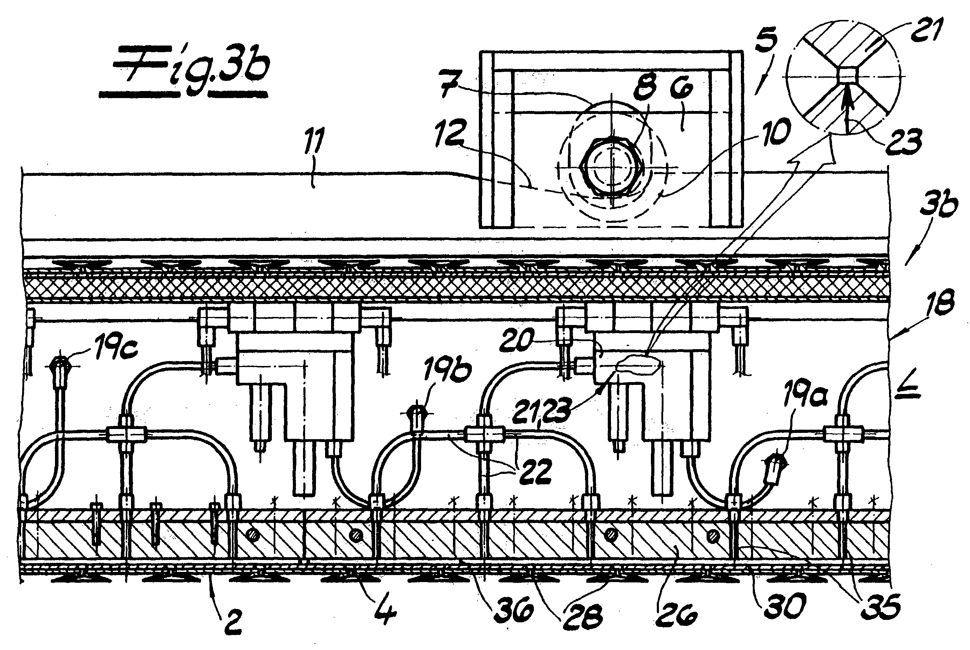

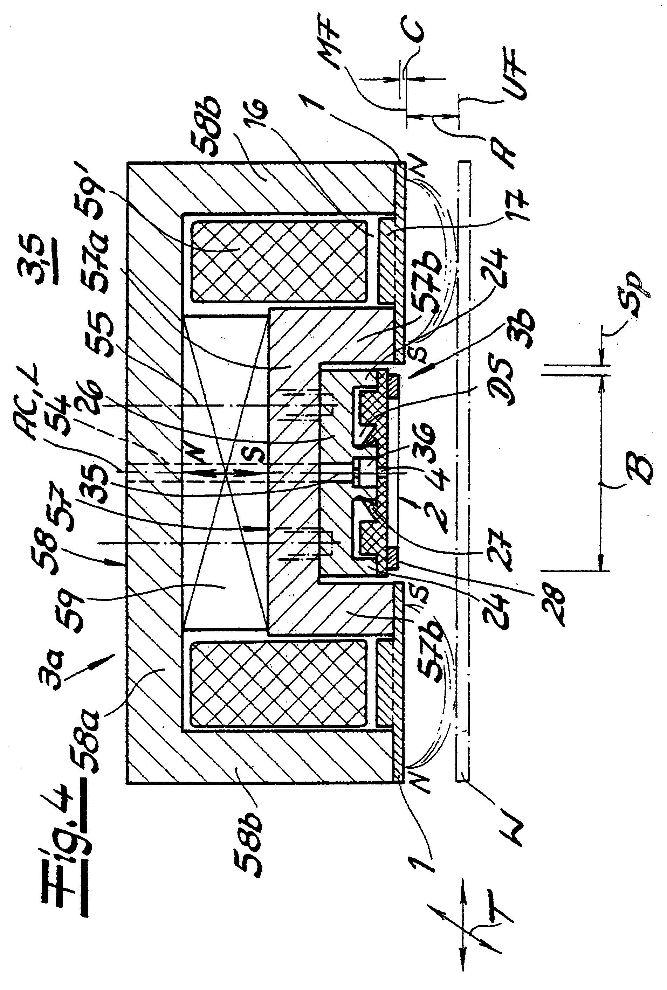

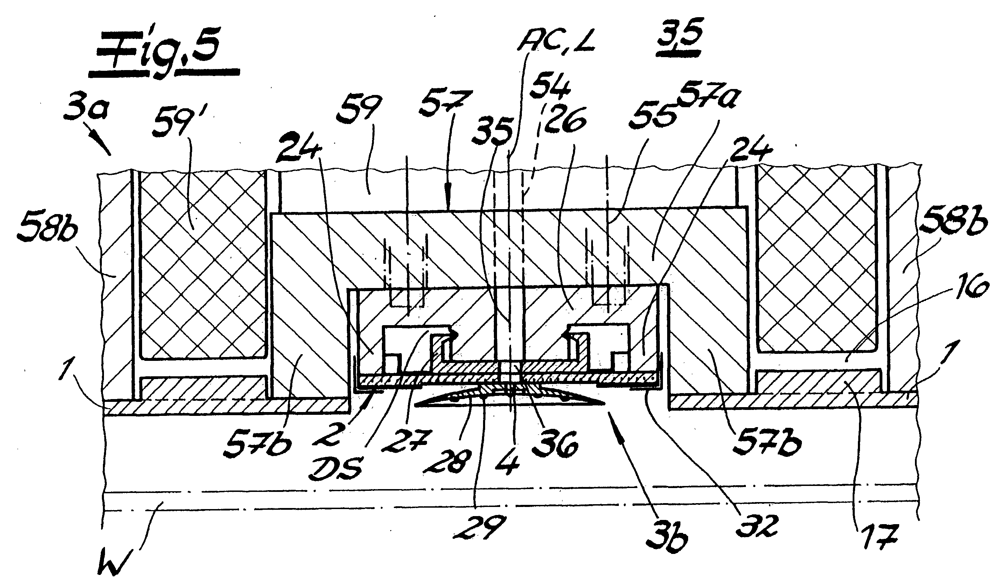

Der Verschiebeträger 5b weist eine am Basisträger 5a entlanggleitende Befestigungsplatte 6 für die Unterdruckvorrichtung 3b und eine in einer Bohrung 7 im Basisträger 5a vertikal geführte Buchse 8 auf. Zur Verminderung der Reibung zwischen Befestigungsplatte 6 und Basisträger 5a ist eine zwischengeschaltete Messingplatte 9 vorgesehen. An die Buchse 8 ist gleichachsig eine Rolle 10 mit U-förmigem Querschnitt zur reitenden Lagerung auf einer zwischen den U-Schenkeln und an der U-Basis anliegenden Zugstange 11 angeschlossen, wobei die Zugstange 11 in Transport(ebenen)richtung T verschiebbar ausgebildet ist und zumindest eine Auflaufschräge 12 zur vertikalen Bewegung der Rolle 10 und damit des Verschiebeträgers 5b im Zuge der Betätigung der Zugstange 11 aufweist. Dies wird insbesondere bei einem Vergleich der Fig. 1 und 2 mit der Fig. 3 (d.h. Fig. 3a bzw. Fig. 3b) deutlich. Sobald die Zugstange 11 betätigt wird, läuft die U-förmige Rolle 10 auf der Auflaufschräge 12 hoch oder nieder, was mit einer entsprechenden Vertikalbewegung des Verschiebeträgers 5b verbunden ist. Auf diese Weise kann der Verschiebeträger und damit die Unterdruckvorrichtung 3b von den Werkstücken W entfernt werden (vgl. Fig. 1) oder wird an die Werkstücke W angestellt (vgl. Fig. 2).

Der erstgenannte Fall ist die am häufigsten verwirklichte Betriebsweise, da ca. 90% der zu transportierenden Werkstücke ferromagnetisch sind, folglich einzig mit der Magnetvorrichtung 3a transportiert werden. Diese Magnetvorrichtung 3a weist eine Hohlprofilleiste 13 mit Hauptdruckluftkammern 14 und eine transportseitig angeschlossene Baueinheit 15 mit zumindest einem Permanentmagneten 59 zur Erzeugung eines Permanentmagnetfeldes und zumindest einer elektrischen Magnetspule bzw. Kompensationsspule 59' zur Erzeugung eines Temporärmagnetfeldes und Kompensation des Permanentmagnetfeldes auf. Selbstverständlich sind anstelle des Permanentmagneten 59 auch Elektromagnete denkbar. Vergleichbar wird beim Ausführungsbeispiel nach den Fig. 4 und 5 verfahren. Die Hohlprofilleiste 13 und die Baueinheit 15 besitzen jeweils Ausnehmungen 16 für Zähne 17 des anliegenden, umlaufenden Magnetfördergurtes 1 (vgl. auch Fig. 4 und 5).

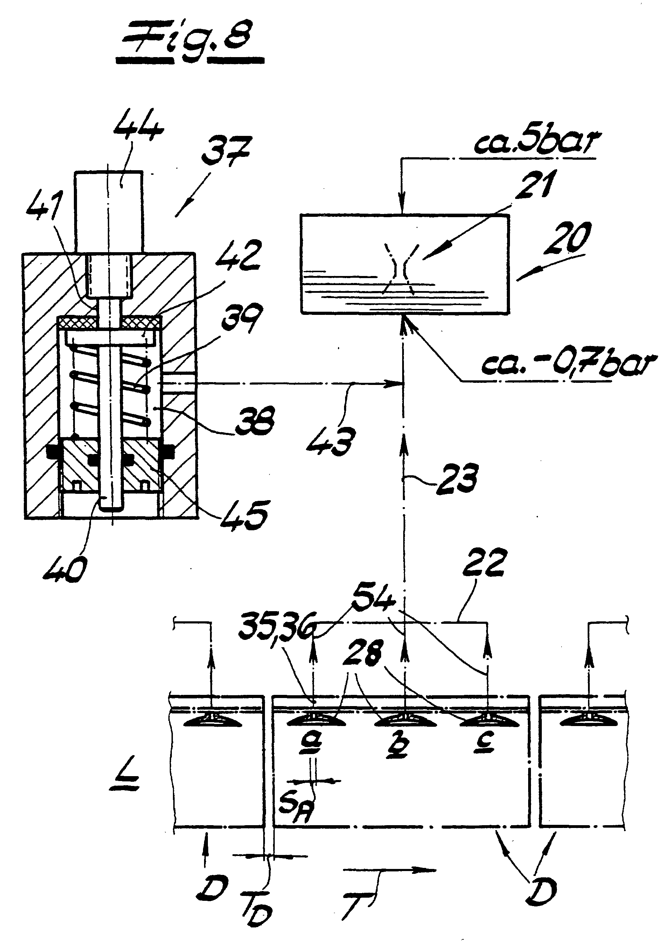

Die Unterdruckvorrichtung 3b besitzt ausweislich der Fig. 1 bis 3 eine Druckluftführungsleiste 18 mit Nebendruckluftkammern 19 sowie zumindest eine Unterdruckquelle 20 mit Vakuumerzeuger(n) 21. Die Unterdruckquelle 20 ist im Detail druckseitig mit der Druckluftführungsleiste 18 oder einer anderen Druckquelle und saugseitig mit den Ansaugöffnungen 4 des Unterdruckfördergurtes 2 verbunden. Nach dem Ausführungsbeispiel in den Fig. 1 bis 3 sind saugseitig der Unterdruckquelle 20 jeweils zwei (Fig. 3a) bzw. drei (Fig. 3b) Saugleitungen 22 angeschlossen. Die Druckluftführungsleiste 18 besitzt eine oder mehrere, im Ausführungsbeispiel drei Nebendruckluftkammern 19a, 19b und 19c. Wie sich insbesondere anhand der Fig. 3b ergibt, sind die Unterdruckquellen 20 in Transportrichtung T jeweils hintereinander im Wechsel an die Nebendruckluftkammern 19a, 19b und 19c angeschlossen. Auf dieser Weise werden Druckeinbrüche in dem gesamten Druckluftzuführungssystem vermieden. Dieses besteht insgesamt aus den mit Druckluft beaufschlagten Hauptdruckluftkammern 14, welche über nicht gezeigte Zuleitungen die Druckluftführungsleiste 18 und damit die Nebendruckluftkammern 19a, 19b und 19c speisen. Bei dem Vakuumerzeuger 21 handelt es sich ausweislich des vergrößerten Ausschnittes in der Fig. 3a, 3b um eine Venturi-Düse 21 mit angeschlossener Unterdruckleitung 23, die mit den vorerwähnten Saugleitungen 22 und damit den Ansaugöffnungen 4 in Verbindung steht (vgl. auch Fig. 8).

Die Unterdruckvorrichtung 3b besitzt darüber hinaus zwei nicht gezeigte Ventile, welche jeweils zwei Stellungen einnehmen können. Das eine Ventil dient zur Druckbeaufschlagung der Unterdruckquelle 20, während das andere Ventil unter Umgehung der Unterdruckquelle 20 zur direkten Druckbeaufschlagung der Ansaugöffnungen 4 vorgesehen ist. Folglich lassen sich mit der Unterdruckquelle 20 Druckverläufe an den Ansaugöffnungen 4 realisieren, wie sie in Fig. 7 gezeigt sind.

Die Unterdruckvorrichtung 3b weist im Querschnitt einen zwischen zumindest zwei sich gegenüberliegenden Zentrierbacken 24 mit jeweiligem Dichtspalt DS angeordneten Führungskörper 26 auf, wobei der Unterdruckfördergurt 2 mit rückseitigen Dichtlippen 27 in die Dichtspalte DS eingreift und mit frontseitigen Saugnäpfen 28 die Werkstücke festhält. Die Zentrierbacken 24 bestehen aus ultrahochmolekularem Niederdruckpolyethylen (PE-UHMW). Bei dem Unterdruckfördergurt 2 handelt es sich nach dem Ausführungsbeispiel um einen Zahnriemen. Dabei sind auch an der Unterdruckvorrichtung 3b - wie bei der Magnetvorrichtung 3a - Ausnehmungen 16 für entsprechende Zähne 17 des Unterdruckfördergurtes 2 vorgesehen. Die Saugnäpfe 28 weisen darüber hinaus innenseitige Noppen 29 auf, welche den Federweg der Saugnäpfe 28 begrenzen und zur Anlage der Werkstücke W dienen. Der Führungskörper 26 besteht aus Stahl mit einer aufgesinterten Gleitbeschichtung. Bei dieser Beschichtung handelt es sich um Molybdändisulfid (MoS₂).

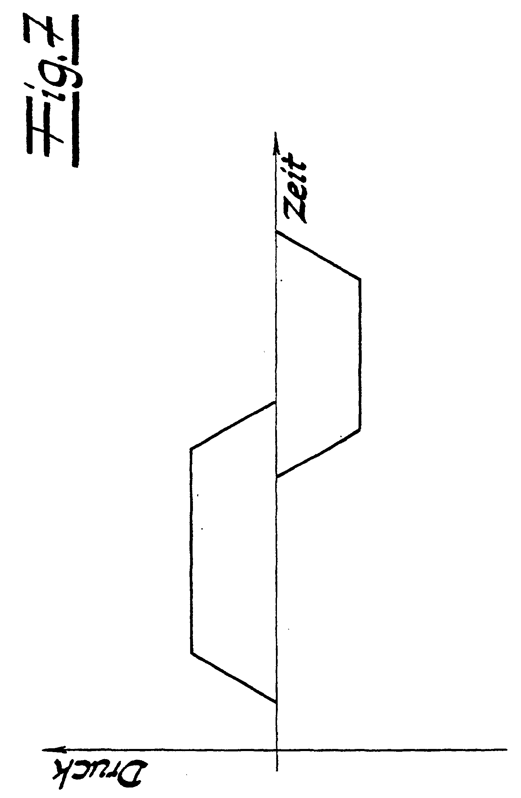

Der Unterdruckfördergurt 2 besitzt durchgängig eine Shorehärte von ca. 90, während die Dichtlippen 27 und die Saugnäpfe 28 sowie die Noppen 29 Shorehärten von ca. 55 aufweisen. Er besteht insgesamt aus drei Teilen, nämlich den Dichtlippen 27, den Saugnäpfen 28 mit Noppen 29 sowie einem Gurtkörper 30. Dabei werden die Dichtlippen 27 und die Saugnäpfe 28 auf den Gurtkörper 30 aufgeschweißt. Insgesamt ist der Unterdruckfördergurt 2 aus PUR (Polyurethan) gefertigt und weist eine PA (Polyamid)-Beschichtung 2' im Bereich einer Kontaktfläche mit dem Führungskörper 26 bzw. angeflanschten Winkeln 32 auf. Hierdurch werden Reibwerte von ca. 0,2 im Vergleich zu 0,5 ohne Beschichtung (d.h. PUR auf Stahl) erreicht (vgl. Fig. 6).

Beidseitig des Führungskörpers 26 sind im Querschnitt zwischen Führungskörper 26 und jeweiliger Zentrierbacke 24 unter Einstellung des jeweiligen Dichtspaltes DS elastisch komprimierbare Schaumstoffzentrierkörper 31 zur zentrischen Halterung des Führungskörpers 26 zwischen den Zentrierbacken 24 vorgesehen. Zusätzlich finden sich die außenseitig an die Zentrierbacken 24 angeflanschten Winkel 32, welche die Zentrierbacken 24 transportseitig unter gleichzeitiger Führung des an den Zentrierbacken 24 anliegenden Unterdruckfördergurtes 2 untergreifen. Hierdurch wird nicht nur eine Führung, sondern gleichzeitig auch ein Schütz des Unterdruckfördergurtes 2 erreicht (vgl. Fig. 1 und 2).

Der Unterdruckfördergurt 2 besitzt im Querschnitt an seiner Rückseite zwei sich gegenüberliegende Dichtlippen 27 mit jeweils einwärts gerichteten Dichtzähnen 33. Selbstverständlich können auch 3, 4 oder mehr Dichtlippen 27 vorgesehen sein. Die Dichtlippen 27 sind im Vergleich zu den dazwischen angeordneten Ansaugöffnungen 4 diametral gegenüberliegend angeordnet. Der Führungskörper 26 weist zu den Dichtzähnen 33 korrespondierende Einfasungen 34 für die hierin eingreifenden Dichtzähne 33 auf. Jeder Dichtzahn 33 besitzt zwei als Dichtkante 33a und Abschlußkante 33b ausgebildete Zahnkanten 33a, 33b, welche einen spitzen Winkel α zwischen sich einschließen, wobei die Dichtkante 33a mit vorgegebenem Winkel β gegenüber der Transport (ebenen) richtung T - regelmäßig der Horizontalen - an einer Dichtfasungskante 34a der Einfasung 34 anliegt, und wobei die Dichtfasungskante 34a ebenfalls eine vorgegebene Neigung γ gegenüber der Transport(ebenen)richtung T aufweist. Diese geometrischen Verhältnisse sind in Verbindung mit den vorerwähnten Winkeln α,β und γ in dem vergrößerten Ausschnitt in Fig. 6 gezeigt. Die Winkel α und β betragen in Ruhestellung, d.h. in vorgespannter Stellung (gestrichelt in Fig. 6 gezeichnet) vor dem Einbau ca. 20° bis ca 60°. Der Winkel γ bewegt sich im Bereich zwischen ca 30° und 80°. Nach dem Ausführungsbeispiel gilt α ≈ β ≈ 30° und γ ≈ 50°. Der Öffnungswinkel δ der Einfasung 34 beträgt ca. 90° bis 120°. Der Neigungswinkel ε, welcher gleichsam die Vorspannung darstellt, liegt im Bereich zwischen ca. 85° bis 95°. Der nicht näher spezifizierte Winkel zwischen Dichtkante 33a und Dichtfasungskante 34a beträgt ca. 15° bis 30°.

Schließlich besitzt der Führungskörper 26 Saugbohrungen 35 für die zentrischen Ansaugöffnungen 4 im Unterdruckfördergurt 2, wobei die Saugbohrungen 35 und die Ansaugöffnungen 4 aufgrund der zentrischen Halterung des Führungskörpers 26 sowie der entsprechenden Führung des Unterdrucktördergurtes 2 im Querschnitt jeweils konzentrisch auf einer Zentralachse AC der Unterdruckvorrichtung 3b angeordnet sind, und wobei sich die Ansaugöffnungen 4 im Zuge des Umlaufens des Unterdruckfördergurtes 2 jeweils auf einer Lärigserstreckungsebene L eines Unterdruckkanals 36 bewegen, welcher transportseitig an die Saugbohrungen 35 zu deren Verbindung untereinander angeschlossen ist (vgl. insbesondere Fig. 1, 2 sowie 4, 5).

Nach dem Ausführungsbeispiel fallen Zentralachse AC der Unterdruckvorrichtung 3b und Längserstreckungsebene L des Unterdruckkanals 36 zusammen. Durch den Selbstzentriereffekt des Unterdruckfördergurtes 2 werden die Dichtzähne 33 aus der in Fig. 6 gezeigten gestrichelten Lage verschwenkt, so daß sich die Dichtkante 33a eng mit großer Flächenanlage an die Dichtfasungskante 34a schmiegt. Gleichzeitig wird der Unterdruckfördergurt 2 insgesamt - aufgrund elastischer Rückstellkräfte des eingesetzten (Elastomer-)Materials - eng an den Führungskörper 26 angelegt. Hierdurch wird im Ergebnis eine zuverlässige Abdichtung des Unterdruckkanals 36 erreicht.

Nach dem Ausführungsbeispiel in den Fig. 4 und 5 ist die Magnetvorrichtung 3a im Querschnitt U-förmig mit U-Basis und U-Schenkeln ausgebildet, wobei die beiden Magnetfördergurte 1 fußseitig an den beiden jeweiligen U-Schenkeln vorbeigeführt werden, während die Unterdruckvorrichtung 3b mit dem Unterdruckfördergurt 2 in Längserstreckung zwischen den beiden Magnetfördergurten 1 angeordnet ist. Ferner weist die Magnetvorrichtung 3a einen zentralen Permanentmagneten 59 und zumindest eine den Permanentmagneten 59 umschließende Kompensationsspule 59' auf. Im Detail ist die Anordnung so getroffen, daß die Magnetvorrichtung 3a im Querschnitt doppelt - U-förmig - mit äußerem U-Anker 58 und innerem U-Anker 57 ausgeführt ist. Sowohl der äußere U-Anker 58 als auch der innere U-Anker 57 weisen jeweils eine Ankerbasis 57a, 58a sowie Ankerschenkel 57b, 58b auf. Dementsprechend sei im folgenden von der äußeren Ankerbasis 58a, der inneren Ankerbasis 57a, den äußeren Ankerschenkeln 58b und schließlich den inneren Ankerschenkeln 57b die Rede.

Die Unterdruckvorrichtung 3b besitzt - wie bereits beschrieben - im Querschnitt den angesprochenen Führungskörper 26 mit Saugbohrungen 35 für die Ansaugöffnungen 4 im Unterdruckfördergurt 2. Saugbohrung 35 und Ansaugöffnung 4 sind jeweils konzentrisch auf der Zentralachse AC der Unterdruckvorrichtung angeordnet, die gleichzeitig die Zentralachse der Magnetvorrichtung 3a ist. Im Zuge des Umlaufens des Unterdruckfördergurtes 2 bewegen sich die Ansaugöffnungen 4 jeweils auf der Längserstrekkungsebene L des Unterdruckkanals 36, welcher transportseitig an die Saugbohrungen 35 zu deren Verbindung untereinander angeschlossen ist. Nach dem Ausführungsbeispiel liegt die Zentralachse AC in der Längserstreckungsebene L, d.h. Zentralachsenebene bzw. Zentralachse AC und Längserstreckungsebene L fallen zusammen.

Der Führungskörper 26 ist in bezug auf die Zentralachse AC bzw. die Längserstreckungsebene L symmetrisch ausgeführt und weist beidseitig angeformte Zentrierbacken 24 auf. Führungskörper 26 und Zentrierbacken 24 bilden ein im wesentlichen U-förmiges Querschnittsprofil. Der Unterdruckfördergurt 2 greift mit den rückseitigen Dichtlippen 27 in die sich bildenden Dichtspalte DS zwischen den beidseitigen Zentrierbacken 24 und dem zentralen Führungskörper 26 ein. Dabei wird im einzelnen so vorgegangen, wie in DE-PS 196 14 741 (vgl. Fig. 4) oder in der DE-Patentanmeldung 197 31 902 (vgl. Fig. 5) beschrieben, auf die ausdrücklich Bezug genommen wird.

Ansonsten sind die geometrischen Verhältnisse beim Führungskörper 26 entsprechend dem Ausführungsbeispiel in Fig. 5 so gewählt, wie dies mit Bezug auf die Fig. 6 bereits beschrieben wurde. Die Ansaugöffnungen 4 und die Saugbohrungen 35 bzw. der Unterdruckkanal 36 münden in eine neben der Magnetvorrichtung 3a angeordnete Saugleitung 54, welche an die Unterdruckvorrichtung 3b mit Bewegungsspiel angeschlossen ist (vgl. Fig. 4, 5). Diese Saugleitung 54 ist ihrerseits ausweislich der Fig. 8 mit einem Vakuumbegrenzungsventil 37 verbunden, welches jeweils parallel zu den Saugbohrungen 4 bzw. der oder den Saugleitungen 54 geschaltet ist. Die Saugleitungen 54 entsprechen im wesentlichen den Saugleitungen 22 in der Ausführungsform nach den Fig. 1 bis 3, so daß vergleichbares für die Saugleitungen 22 gilt.

Dabei münden die Saugleitungen 54 üblicherweise in eine gemeinsame Unterdruckleitung 23, welche in die Unterdruckvorrichtung 20 übergeht. Bei der in Fig. 8 dargestellten Alternative ist das Vakuumbegrenzungsventil 37 an die Unterdruckleitung 23 angeflanscht. Selbstverständlich ist auch nur eine Saugleitung 54 anstelle der drei in Fig. 8 gezeigten, denkbar.

Jedenfalls sind in Längserstreckungsebene L bzw. Längsebene des Unterdruckkanals 36 (entsprechend der Transport(ebenen)richtung T) einzelne Sektionen mit jeweils zwei oder mehreren Saugbohrungen 35 mit angeschlossenen Saugleitungen 22 unter Bildung von jeweiligen Saugmodulen D mit jeweils einer Unterdruckquelle 20 verbunden. Jedes Saugmodul D weist zumindest ein unterdruckmäßig parallel zu den Saugbohrungen 35 bzw. Saugleitungen 22, 54 geschaltetes Vakuumbegrenzungsventil 37 auf. Letztlich kommt es darauf an, daß das Vakuumbegrenzungsventil 37 an irgendeiner Stelle an das Unterdrucksystem (Saugleitungen 22, 54 Unterdruckleitung 23, Saugbohrungen 35 sowie Unterdruckkanal 36 und Ansaugöffnungen 4) angeschlossen ist. Nach dem in Fig. 8 dargestellten Szenario sind drei Saugbohrungen 35 mit angeschlossenen Saugleitungen 22, 54 pro Saugmodul D vorgesehen, wobei das Vakuumbegrenzungsventil 37 jeweils parallel zu den Saugbohrungen 35 bzw. den Saugleitungen 22, 54 geschaltet ist. Die Saugleitungen 22, 54 münden üblicherweise in eine gemeinsame Unterdruckleitung 23, welche in die Unterdruckvorrichtung 20 übergeht.

Das Vakuumbegrenzungsventil 37 öffnet zur Begrenzung des Unterdrucks bei einem vorgegebenen Unterdruckschwellenwert im Unterdruckkanal 36 bzw. den Saugleitungen 22, 54. Selbstverständlich steht dieser (gleiche) Unterdruck auch in den Ansaugöffnungen 4 und der Unterdruckleitung 23 sowie den Saugbohrungen 35 an. Wenn das Vakuumbegrenzungsventil 37 bei Überschreiten des vorgenannten Unterdruckschwellenwertes öffnet, wird der Unterdruck in den vorerwähnten Baueinheiten reduziert mit dem Ergebnis, daß der Unterdruckfordergurt 2 nicht mehr so stark an den Führungskörper 26 angesaugt wird.

Im einzelnen weist hierzu das Vakuumbegrenzungsventil 37 eine an die Saugleitungen 22, 54 oder die gemeinsame Unterdruckleitung 23 angeschlossene Unterdruckkammer 38 auf, die federunterstützt mittels eines an einen Ventilstößel 40 angeschlossenen, eine Zuluftöffnung 41 verschließenden Ventiltellers 42 gegenüber Atmosphärendruck abgesperrt ist.

Zur Federunterstützung dient eine Feder 39 mit vorgegebenem bzw. einstellbarem Kennwert.

Die Funktionsweise ergibt sich aus der Fig. 8. Die Unterdruckquelle 20 mit Venturi-Düse 21 ist als sogenannter "Ejektor" ausgeführt. Dieser Ejektor bzw. die Unterdruckquelle 20 wird druckseitig mit Druckluft in der Größenordnung von ca. 5 bar beaufschlagt und erzeugt saugseitig einen Unterdruck bzw. ein Vakuum von ca. -0,7 bar (vgl. die entsprechenden Pfeile in Fig. 8). Wenn nun der mit a bezeichnete, in Transpörtrichtung T vorderste, Saugnapf 28 durch ein angesaugtes Werkstück verschlossen wird, stellt sich im Unterdrucksystem (Ansaugöffnung 4, Unterdruckkanal 36, Saugbohrung 35, Saugleitungen 22, 54 und Unterdruckleitung 23) ein Unterdruck von ca. -0,12 bar ein, im Gegensatz zur Situation bei unbeaufschlagten Saugnäpfen, wo der Unterdruck ca. -0,05 bar beträgt. Jedenfalls ist der vorgenannte Unterdruck von ca. -0,12 bar ausreichend, um anhängende Werkstücke sicher festzuhalten. Das parallel zu den Saugleitungen 22 geschaltete, auf ca. -0,15 bar eingestellte Vakuumbegrenzungsventil 37 öffnet nicht.

Wird nun der zweite Saugnapf 28 (Buchstabe b) des gleichen Saugmoduls D mit einem Werkstück belegt, so erhöht sich der Unterdruck in dem vorgenannten System auf ca. -0,27 bar. Dies führt dazu, daß das auf ca. -0,15 bar eingestellte Vakuumbegrenzungsventil 37 öffnet. D.h., dadurch daß die Unterdruckkammer 38 über eine Vakuumleitung 43 an die Unterdruckleitung 23 angeschlossen ist, erhöht sich auch in der Unterdruckkammer 38 der Unterdruck entsprechend (nämlich auf ca. -0,27 bar). Dies hat zur Folge, daß sich wegen des anstehenden Atmosphärendrucks die Unterdruckkammer 38 gleichsam "zusammenzieht", d.h., der Ventilteller 42 gegen die Kraft der Feder 39 von der Zuluftöffnung 41 abgehoben wird. Gleichzeitig strömt Außenluft über einen Filter 44 in die Unterdruckkammer 38 und damit über die Vakuumleitung 43 in das vorerwähnte Vakuumsystem.

Ohne das parallel geschaltete Vakuumbegrenzungsventil 37 würde bei Belegung des dritten Saugnapfes 28 (Buchstabe c) in dem System sogar ein Unterdruck von ca. -0,64 bar entstehen. Jedenfalls sorgt das Vakuumbegrenzungsventil 37 insgesamt dafür, daß der Unterdruckfördergurt 2 nicht übermäßig von dem Unterdruckkanal 36 angesaugt und damit gegen den Führungskörper 26 gedrückt wird. Folglich ist die Reibung zwischen Unterdruckfördergurt 2 und Führungskörper 26 insgesamt verringert, so daß sich die eingangs angesprochenen Vorteile ergeben. Selbstverständlich läßt sich die Ansaugkraft einstellen, und zwar im einfachsten Fall dadurch, daß die Vorspannung der Feder 39 durch eine lediglich angedeutete Einstellschraube 45 innerhalb der Unterdruckkammer 38 variiert wird.

Die Ansaugöffnungen 4 im Unterdruckfördergurt 2 sind üblicherweise so bemessen, daß deren Durchmesser größer ist als der Abstand der Module D untereinander, so daß immer eine Unterdruckbeaufschlagung der zugehörigen Saugnäpfe 28 gewährleistet ist. D.h., wenn mit S_{A} der Durchmesser der Ansaugöffnungen 4 des Unterdruckfördergurtes 2 und mit T_{D} der Abstand der Saugmodule D bezeichnet wird, gilt üblicherweise S_{A} > T_{D}.

Schließlich ist bei dem Ausführungsbeispiel gemäß der Fig. 4 und 5 der Führungskörper 26 mit den Zentrierbacken 24 so ausgeführt, daß er eine an die Breite B des Unterdruckfördergurtes 2 angepaßte Querausdehnung aufweist, wobei der Führungskörper 26, die Zentrierbacken 24 und der Unterdruckfördergurt 2 mit seitlichem Spiel S_{P} in den inneren U-Anker 57 eingesetzt sind. Sowohl der innere U-Anker 57 als auch der äußere U-Anker 58 sind als sogenannte Stahlpole mit Blick auf den Permanentmagneten 59 ausgeführt und bilden einen magnetischen Rückschluß, wie dies durch die sich formenden magnetischen Pole (S = Südpol; N = Nordpol) angedeutet und im Detail in der DE-Patentanmeldung 197 24 634.6-22 beschrieben ist. Auch auf die bereits genannte DE-PS 34 23 482 sei Bezug genommen. Der Permanentmagnet 59 besteht aus Strontium-Ferrid, Neodym-Eisen-Bor oder ist als Elektromagnet ausgebildet.

## Patentansprüche

1. Vorrichtung zum Transport von Werkstücken (W), insbesondere von hängenden, tafelförmigen Werkstücken (W) wie Blechen oder Platten, mit zumindest einem umlaufend angetriebenen Fördergurt (1, 2) für die hieran anzulegenden Werkstücke (W), und mit einer Haltevorrichtung (3), an welcher der Fördergurt (1, 2) vorbeigeführt wird, wobei die Haltevorrichtung (3) die Werkstücke (W) mittels eines den Fördergurt (1, 2) durchdringenden Magnetfeldes und/oder durch Erzeugen von Unterdruck an Ansaugöffnungen (4) des Fördergurtes (1, 2) am Fördergurt (1, 2) festhält, **dadurch gekennzeichnet, dass**
- die Haltevorrichtung (3) zumindest eine Magnetvorrichtung (3a) mit Magnetfördergurt (1) und zumindest eine hiervon getrennte Unterdruckvorrichtung (3b) mit Unterdruckfördergurt (2) aufweist, wobei
- die Magnetvorrichtung (3a) oder die Unterdruckvorrichtung (3b) mit ihrem jeweiligen Fördergurt (1, 2) gegenüber einem gemeinsamen Bezugsglied (5) verschiebbar und in Kontakt mit den zu transportierenden Werkstücken (W) bringbar sind, und wobei
- die Magnetvorrichtung (3a) an einen Basisträger (5a) und die Unterdruckvorrichtung (3b) an einen demgegenüber im Wesentlichen vertikal im Vergleich zu einer Transportrichtung (T) bewegbaren Verschiebeträger (5b) angeflanscht ist, oder umgekehrt.

2. Vorrichtung nach Anspruch 1, **dadurch gekennzeichnet, dass** die Magnetvorrichtung (3a) und die Unterdruckvorrichtung (3b) gemeinsam an eine sich in Transportrichtung (T) erstreckende Halteprofilleiste (5) als Bezugsglied (5) angeschlossen sind, wobei die Halteprofilleiste (5) den Basisträger (5a) und den Verschiebeträger (5b) aufweist. vertikal geführte Buchse (8) aufweist.

3. Vorrichtung nach Anspruch 1 oder 2, **dadurch gekennzeichnet, daß** der Verschiebeträger (5b) eine am Basisträger (5a) entlanggleitende Befestigungsplatte (6) für die Unterdruckvorrichtung (3b) und eine in einer Bohrung (7) im Basisträger (5a)

4. Vorrichtung nach Anspruch 3, **dadurch gekennzeichnet, daß** an die Buchse (8) gleichachsig eine Rolle (10) mit U-förmigem Querschnitt zur reitenden Lagerung auf einer zwischen den U-Schenkeln und an der U-Basis anliegenden Zugstange (11) angeschlossen ist, wobei die Zugstange (11) in Transport(ebenen)richtung (T) verschiebbar ausgebildet ist und zumindest eine Auflaufschräge (5) zur vertikalen Bewegung der Rolle (10) und damit des Verschiebeträgers (5b) im Zuge der Betätigung der Zugstange (11) aufweist.

5. Vorrichtung nach einem der Ansprüche 1 bis 4, **dadurch gekennzeichnet, daß** die Magnetvorrichtung (3a) eine Hohlprofilleiste (13) mit Hauptdruckluftkammern (14) und eine transportseitig angeschlossene Baueinheit (15) mit zumindest einem Permanentmagneten (59) zur Erzeugung eines Permanentmagnetfeldes und zumindest einer elektrischen Kompensationsspule (59') zur Erzeugung eines Temporärmagnetfeldes und Kompensation des Permanentmagnetfeldes aufweist.

6. Vorrichtung nach einem der Ansprüche 1 bis 5, **dadurch gekennzeichnet, daß** die Unterdruckvorrichtung (3b) eine Druckführungsleiste (18) mit Nebendruckluftkammern (19) sowie zumindest eine Unterdruckquelle (20) mit Vakuum-Erzeuger (n) (21) aufweist, wobei die Unterdruckquelle (20) druckseitig mit der Druckführungsleiste (18) und saugseitig mit den Ansaugöffnungen (4) verbunden ist.

7. Vorrichtung nach einem der Ansprüche 1 bis 6, **dadurch gekennzeichnet, daß** die Unterdruckvorrichtung (3b) in die als Bezugsglied (5) ausgebildete Magnetvorrichtung (3a) integriert und gegenüber der Magnetvorrichtung (3a) in Richtung auf die Werkstücke (W) bewegbar ist.

8. Vorrichtung nach Anspruch 7, **dadurch gekennzeichnet, daß** die Magnetvorrichtung (3a) im Querschnitt U-förmig mit U-Basis und U-Schenkeln ausgebildet ist, wobei zumindest zwei Magnetfördergurte (1) fußseitig an den beiden jeweiligen U-Schenkeln vorbeigeführt werden, während die Unterdruckvorrichtung (3b) mit dem Unterdruckfördergurt (2) in Längserstreckung zwischen den beiden Magnetfördergurten (1) angeordnet ist.

9. Vorrichtung nach einem der Ansprüche 1 bis 8, **dadurch gekennzeichnet, daß** die Magnetvorrichtung (3a) im Querschnitt doppelt U-förmig mit äußerem U-Anker (58) mit äußerer Ankerbasis (58a) und äußeren Ankerschenkeln (58b) und innerem U-Anker (57) mit innerer Ankerbasis (57a) und inneren Ankerschenkeln (57b) ausgebildet ist, wobei der Permanentmagnet (59) zwischen den beiden Ankerbasen (58a, 57a) angeordnet ist, und wobei die Kompensationsspule (59') zwischen jeweils inneren und äußeren Ankerschenkeln (57b, 58b) plaziert ist.

10. Vorrichtung nach einem der Ansprüche 1 bis 9, **dadurch gekennzeichnet, daß** die Unterdruckvorrichtung (3b) eine angeschlossene Verstellvorrichtung (55) zur im wesentlichen vertikalen Bewegung in Richtung auf die Werkstücke (W) und zurück aufweist.

11. Vorrichtung nach Anspruch 10, **dadurch gekennzeichnet, daß** die Verstellvorrichtung (55) an die Unterdruckvorrichtung (3b) kopfseitig und an die Magnetvorrichtung (3a) fußseitig angeschlossen ist.

12. Vorrichtung nach einem der Ansprüche 1 bis 11, **dadurch gekennzeichnet, daß** die Unterdruckvorrichtung (3b) im Querschnitt einen Führungskörper (26) mit Saugbohrungen (35) für die Ansaugöffnungen (4) im Unterdruckfördergurt (2) aufweist.

13. Vorrichtung nach Anspruch 12, **dadurch gekennzeichnet, daß** die Saugbohrungen (35) und die Ansaugöffnungen (4) konzentrisch auf einer Zentralachse (AC) der Unterdruckvorrichtung (3b) angeordnet sind, wobei sich die Ansaugöffnungen (4) im Zuge des Umlaufens des Unterdruckfördergurtes (2) jeweils auf einer Längserstreckungsebene (L) eines Unterdruckkanals (36) bewegen, welcher transportseitig an die Saugbohrungen (35) zu deren Verbindung untereinander angeschlossen ist.

14. Vorrichtung nach einem der Ansprüche 1 bis 13, **dadurch gekennzeichnet, daß** die Unterdruckvorrichtung (3b) zwei Ventile aufweist, wobei das eine Ventil zur Druckbeaufschlagung der Unterdruckquelle (20) und das andere Ventil unter Umgehung der Unterdruckquelle (20) zur Druckbeaufschlagung der Ansaugöffnungen (4) ausgebildet ist.

15. Vorrichtung nach einem der Ansprüche 1 bis 14, **dadurch gekennzeichnet, daß** der Unterdruckfördergurt (2) mit rückseitigen Dichtlippen (27) in sich bildende Dichtspalte (DS) zwischen beidseitigen Zentrierbacken (24) und dem zentralen Führungskörper (26) eingreift und gegebenenfalls frontseitige Saugnäpfe (28) besitzt.

16. Vorrichtung nach einem der Ansprüche 1 bis 15, **dadurch gekennzeichnet, daß** einzelne Sektionen mit jeweils zwei oder mehreren Saugbohrungen (35) mit angeschlossenen Saugleitungen (22, 54) unter Bildung von jeweiligen Saugmodulen (D) mit jeweils einer Unterdruckquelle (20) verbunden sind.

17. Vorrichtung nach Anspruch 16, **dadurch gekennzeichnet, daß** zumindest ein parallel zu den Saugleitungen (22, 54) geschaltetes Vakuumbegrenzungsventil (37) vorgesehen ist.

18. Vorrichtung nach Anspruch 17, **dadurch gekennzeichnet, daß** das Vakuumbegrenzungsventil (37) sich zur Begrenzung des Unterdruckes bei einem vorgegebenen Unterdruckschwellenwert in den Saugleitungen (22, 54) öffnet.

19. Vorrichtung nach Anspruch 18, **dadurch gekennzeichnet, daß** das Vakuumbegrenzungsventil (37) eine an die Saugleitung (22, 54) oder an eine gemeinsame Unterdruckleitung (23) angeschlossene Unterdruckkammer (38) aufweist, die federunterstützt mittels eines an einen Ventilstößel (40) angeschlossenen, eine Zuluftöffnung (41) verschließenden, Ventiltellers (42) gegenüber Atmosphärendruck abgesperrt ist.

## Claims

1. Device for the transport of workpieces (W), especially of suspended, tabular workpieces (W) such as sheets or plates, with at least one rotary-driven conveyor belt (1, 2) for the workpieces (W) to be laid on it, and with a holding device (3) past which the conveyor belt (1, 2) is guided, the holding device (3) retaining the workpieces (W) on the conveyor belt (1, 2) by means of a magnetic field penetrating the conveyor belt (1, 2) and/or by generating a vacuum at suction orifices (4) of the conveyor belt (1, 2), **characterized in that**
- the holding device (3) has at least one magnetic device (3a) having a magnetic conveyor belt (1), and at least one vacuum device (3b) separated from this and having a vacuum conveyor belt (2),
- the magnetic device (3a) or the vacuum device (3b) being displaceable with their respective conveyor belt (1, 2) in relation to a common reference member (5) and being capable of being brought into contact with the workpieces (W) to be transported, and
- the magnetic device (3a) being flanged to a basic carrier (5a) and the vacuum device (3b) being flanged to a displacement carrier (5b), which in contrast is movable substantially vertically in relation to a transport direction (T), or vice versa.

2. Device according to Claim 1, **characterized in that** the magnetic device (3a) and the vacuum device (3b) are connected jointly to a holding profile strip (5) extending in the transport direction (T) and functioning as a reference member (5), the holding profile strip (5) comprising the basic carrier (5a) and the displacement carrier (5b).

3. Device according to Claim 1 or 2, **characterized in that** the displacement carrier (5b) has a fastening plate (6) for the vacuum device (3b), the said fastening plate sliding along the basic carrier (5a), and a bush (8) guided vertically in a bore (7) in the basic carrier (5a).

4. Device according to Claim 3, **characterized in that** a roller (10) of U-shaped cross-section, for straddling mounting on a tension rod (11) coming to bear between the U-legs and on the U-base, is connected coaxially to the bush (8), the tension rod (11) being designed to be displaceable in the transport (plane) direction (T) and having at least one run-on slope (12) for the vertical movement of the roller (10) and therefore of the displacement carrier (5b) during the actuation of the tension rod (11).

5. Device according to one of Claims 1 to 4, **characterized in that** the magnetic device (3a) has a hollow profile strip (13), with main compressed-air chambers (14), and a structural unit (15), connected on the transport side, with at least one permanent magnet (59) for generating a permanent magnetic field and with at least one electrical compensating coil (59') for generating a temporary magnetic field and for compensating the permanent magnetic field.

6. Device according to one of Claims 1 to 5, **characterized in that** the vacuum device (3b) has a pressure guide strip (18), with secondary compressed-air chambers (19), and at least one vacuum source (20) with a vacuum generator or with vacuum generators (21), the vacuum source (20) being connected on the delivery side to the pressure guide strip (18) and on the suction side to the suction orifices (4).

7. Device according to one of Claims 1 to 6, **characterized in that** the vacuum device (3b) is integrated into the magnetic device (3a) designed as a reference member (5) and is capable of being moved in the direction of the workpieces (W) in relation to the magnetic device (3a).

8. Device according to Claim 7, **characterized in that** the magnetic device (3a) is designed with a U-shaped cross-section, with a U-base and U-legs, at least two magnetic conveyor belts (1) being guided past the two respective U-legs on the foot side, whilst the vacuum device (3b) together with the vacuum conveyor belt (2) is arranged between the two magnetic conveyor belts (1) along the longitudinal extent.

9. Device according to one of Claims 1 to 8, **characterized in that** the magnetic device (3a) is designed with a double U-shaped cross-section, with an outer U-armature (58) having an outer armature base (58a) and outer armature legs (58b) and with an inner U-armature (57) having an inner armature base (57a) and inner armature legs (57b), the permanent magnet (59) being arranged between the two armature bases (58a, 57a), and the compensating coil (59') being placed between the inner and outer armature legs (57b, 58b) in each case.

10. Device according to one of Claims 1 to 9, **characterized in that** the vacuum device (3b) has a connected adjusting device (55) for essentially vertical movement in the direction of the workpieces (W) and back again.

11. Device according to Claim 10, **characterized in that** the adjusting device (55) is connected to the vacuum device (3b) on the head side and to the magnetic device (3a) on the foot side.

12. Device according to one of Claims 1 to 11, **characterized in that** the vacuum device (3b) has, in cross-section, a guide body (26) with suction bores (35) for the suction orifices (4) in the vacuum conveyor belt (2).

13. Device according to Claim 12, **characterized in that** the suction bores (35) and the suction orifices (4) are arranged concentrically on a central axis (AC) of the vacuum device (3b), and, during the rotation of the vacuum conveyor belt (2), the suction orifices (4) in each case move on a plane of longitudinal extent (L) of a vacuum duct (36) which is connected on the transport side to the suction bores (35) for the purpose of connecting these to one another.

14. Device according to one of Claims 1 to 13, **characterized in that** the vacuum device (3b) has two valves, one valve being designed to apply pressure to the vacuum source (20) and the other valve, bypassing the vacuum source (20), being designed to apply pressure to the suction orifices (4).

15. Device according to one of Claims 1 to 14, **characterized in that** the vacuum conveyor belt (2) engages with rear sealing lips (27) into sealing gaps (DS) forming between centring jaws (24) located on both sides and the central guide body (26) and, if appropriate, possesses front suction cups (28).

16. Device according to one of Claims 1 to 15, **characterized in that** individual sections, each having two or more suction bores (35), are connected to connected suction lines (22, 54), so as to form respective suction modules (D), each having a vacuum source (20).

17. Device according to Claim 16, **characterized in that** at least one vacuum-limiting valve (37) connected in parallel to the suction lines (22, 54) is provided.

18. Device according to Claim 17, **characterized in that** the vacuum-limiting valve (37) opens for the purpose of limiting the vacuum in the event of a predetermined vacuum threshold value in the suction lines (22, 54).

19. Device according to Claim 17, **characterized in that** the vacuum-limiting valve (37) has a vacuum chamber (38) which is connected to the suction line (22, 54) or to a common vacuum line (23) and which, with spring assistance, is shut off relative to the atmospheric pressure by means of a valve disc (42) connected to a valve tappet (40) and closing an incoming-air orifice (41).

## Revendications

1. Dispositif pour le transport de pièces (W), en particulier de pièces suspendues en forme de feuilles (W) telles que des tôles ou des plaques, comprenant au moins une bande de convoyage à entraînement continu (1, 2) pour les pièces (W) appliquées contre elle, et un dispositif de retenue (3) devant lequel défile la bande de convoyage (1, 2), le dispositif de retenue (3) maintenant les pièces (W) contre la bande de convoyage (1, 2) au moyen d'un champ magnétique traversant la bande de convoyage (1, 2) et/ou en générant une dépression au niveau d'ouvertures d'aspiration (4) de la bande de convoyage (1, 2), **caractérisé en ce que**
- le dispositif de retenue (3) comprend au moins un dispositif magnétique (3a) avec une bande de convoyage magnétique (1) et, séparé de celle-ci, au moins un dispositif à dépression (3b) avec une bande de convoyage à dépression (2),
- le dispositif magnétique (3a) ou le dispositif à dépression (3b) pouvant, par leur bande de convoyage respective (1, 2), être déplacés par rapport à un organe de référence commun (5) et mis en contact avec les pièces à transporter (W).
- le dispositif magnétique (3a) étant raccordé à un support de base (5a) et le dispositif à dépression (3b) l'étant, en vis-à-vis, à un support mobile (5b) apte à se déplacer sensiblement verticalement par rapport à un sens de transport (T), ou inversement.

2. Dispositif selon la revendication 1, **caractérisé en ce que** le dispositif magnétique (3a) et le dispositif à dépression (3b) sont reliés conjointement à une barrette profilée de retenue (5) qui s'étend dans le sens de transport (T) et qui fait fonction d'organe de référence (5), la barrette profilée de retenue (5) comportant le support de base (5a) et le support mobile (5b).

3. Dispositif selon la revendication 1 ou 2, **caractérisé en ce que** le support mobile (5b) comporte une plaque de fixation (6), laquelle glisse le long du support de base (5a) et est destinée au dispositif à dépression (3b), et une douille (8) guidée verticalement dans un trou (7) du support de base (5a).

4. Dispositif selon la revendication 3, **caractérisé en ce qu'**un galet (10) à section en U monté à cheval sur une barre de traction (11) disposée entre les branches du U et la base du U est relié à la douille (8) de même axe, la barre de traction (11) étant apte à se déplacer dans le sens du (plan de) transport (T) et comportant au moins une rampe ascendante (5) pour déplacer verticalement le galet (10) et donc le support mobile (5b) au cours de l'actionnement de la barre de traction (11).

5. Dispositif selon l'une des revendications 1 à 4, **caractérisé en ce que** le dispositif magnétique (3a) comporte une barrette profilée de retenue (13) pourvue de chambres principales d'air comprimé (14) et, reliée à celle-ci côté transport, une unité structurelle (15) munie d'au moins un aimant permanent (59) pour générer un champ magnétique permanent et d'au moins une bobine électrique de compensation (59') pour générer un champ magnétique temporaire et compenser le champ magnétique permanent.

6. Dispositif selon l'une des revendications 1 à 5, **caractérisé en ce que** le dispositif à dépression (3b) comporte une barrette de conduction de pression (18) pourvue de chambres secondaires d'air comprimé (19) ainsi qu'au moins une source de dépression (20) munie d'un (de) générateur(s) de vide (21), la source de dépression (20) étant reliée, côté refoulement, à la barrette de conduction de pression (18), et côté aspiration, aux ouvertures d'aspiration (4).

7. Dispositif selon l'une des revendications 1 à 6, **caractérisé en ce que** le dispositif à dépression (3b) est intégré dans le dispositif magnétique (3a) faisant fonction d'organe de référence (5) et peut se déplacer en direction des pièces (W) par rapport au dispositif magnétique (3a).

8. Dispositif selon la revendication 7, **caractérisé en ce que** le dispositif magnétique (3a) présente en coupe la forme d'un U avec une base de U et des branches de U, au moins deux bandes de convoyage magnétique (1) défilant sur le dessous de chacune des deux branches du U, tandis que le dispositif à dépression (3b) muni de la bande de convoyage à dépression (2) est disposé longitudinalement entre les deux bandes de convoyage magnétique (1).

9. Dispositif selon l'une des revendications 1 à 8, **caractérisé en ce que** le dispositif magnétique (3a) présente en coupe la forme d'un double U avec un induit extérieur en U (58), constitué d'une base d'induit extérieur (58a) et de branches d'induit extérieur (58b), et avec un induit intérieur en U (57), constitué d'une base d'induit intérieur (57a) et de branches d'induit intérieur (57b), l'aimant permanent (59) étant disposé entre les deux bases d'induits (58a, 57a), et la bobine de compensation (59') étant disposée entre les branches (57b, 58b) des induits intérieur et extérieur.

10. Dispositif selon l'une des revendications 1 à 9, **caractérisé en ce que** le dispositif à dépression (3b) est relié à un dispositif de déplacement (55) qui assure un déplacement sensiblement vertical en direction des pièces (W) et dans la direction inverse.

11. Dispositif selon la revendication 10, **caractérisé en ce que** le dispositif de déplacement (55) est relié au dessus du dispositif à dépression (3b) et au dessous du dispositif magnétique (3a).

12. Dispositif selon l'une des revendications 1 à 11, **caractérisé en ce que** le dispositif à dépression (3b) comporte, en coupe, un corps de guidage (26) pourvu de trous d'aspiration (35) pour les ouvertures d'aspiration (4) de la bande de convoyage à dépression (2).

13. Dispositif selon la revendication 12, **caractérisé en ce que** les trous d'aspiration (35) et les ouvertures d'aspiration (4) sont disposés de manière concentrique sur un axe central (AC) du dispositif à dépression (3b), les ouvertures d'aspiration (4) se déplaçant chacune, au cours de la rotation de la bande de convoyage à dépression (2), dans le plan d'extension longitudinale (L) d'un canal de dépression (36) qui est relié, côté transport, aux trous d'aspiration (35) pour les faire communiquer entre eux.

14. Dispositif selon l'une des revendications 1 à 13, **caractérisé en ce que** le dispositif à dépression (3b) comporte deux valves, l'une des valves étant conçue pour mettre en pression la source de dépression (20) et l'autre valve pour mettre en pression les ouvertures d'aspiration (4) en contournant la source de dépression (20).

15. Dispositif selon l'une des revendications 1 à 14, **caractérisé en ce que** la bande de convoyage à dépression (2) pénètre, par l'intermédiaire de lèvres d'étanchéité postérieures (27), dans des interstices d'étanchéité (DS) ménagés entre des mâchoires centrales (24) situées des deux côtés et le corps central de guidage (26) et, le cas échéant, possède des ventouses frontales (28).

16. Dispositif selon l'une des revendications 1 à 15, **caractérisé en ce que** les différentes sections sont chacune raccordées à une source de dépression (20) par deux ou plusieurs trous d'aspiration (35) reliés à des conduites d'aspiration (22, 54) en formant chacune un module d'aspiration (D).

17. Dispositif selon la revendication 16, **caractérisé en ce qu'**il est prévu au moins une valve de limitation de vide (37) montée en parallèle aux conduites d'aspiration (22, 54).

18. Dispositif selon la revendication 17, **caractérisé en ce que** la valve de limitation de vide (37) s'ouvre pour limiter la dépression en présence d'une valeur de seuil de dépression prédéfinie dans les conduites d'aspiration (22, 54).

19. Dispositif selon la revendication 17, **caractérisé en ce que** la valve de limitation de vide (37) comporte une chambre de dépression (38) qui est reliée à la conduite d'aspiration (22, 54) ou à une conduite commune de dépression (23) et qui, avec une assistance élastique, est isolée de la pression atmosphérique au moyen d'un plateau de valve (42), lequel est relié à un poussoir de valve (40) et obture un orifice d'alimentation en air (41).
